# EUROPEAN PATENT APPLICATION

(11) **EP 4 462 517 A1**
(43) Date of publication of application: **13.11.2024**
(21) Application number: 24744727.9
(22) Date of filing: 18.01.2024
(51) Int. Cl.: H01M 4/62, C08F 214/26, C08L 27/18, H01M 4/13, H01M 4/139

(54) **TETRAFLUOROETHYLENE-BASED POLYMER COMPOSITION, ELECTROCHEMICAL DEVICE BINDER, ELECTRODE MIXTURE, ELECTRODE, AND SECONDARY BATTERY**

(30) Priority: 18.01.2023 JP 2023005936
(71) Applicant: DAIKIN INDUSTRIES, LTD., Osaka-shi, Osaka 530-0001 (JP)
(72) Inventor: NISHIMURA, Kenta, Osaka-Shi, Osaka 530-0001 (JP); YAMADA, Takaya, Osaka-Shi, Osaka 530-0001 (JP); YASUDA, Kohei, Osaka-Shi, Osaka 530-0001 (JP); KATO, Taketo, Osaka-Shi, Osaka 530-0001 (JP); INOUE, Ryo, Osaka-Shi, Osaka 530-0001 (JP); TOKUDA, Masato, Osaka-Shi, Osaka 530-0001 (JP); ATSUMO, Ken, Osaka-Shi, Osaka 530-0001 (JP); YAMAMOTO, Emi, Osaka-Shi, Osaka 530-0001 (JP); TERADA, Junpei, Osaka-Shi, Osaka 530-0001 (JP); YAMANAKA, Taku, Osaka-Shi, Osaka 530-0001 (JP)
(74) Representative: Hoffmann Eitle
(86) International application number: PCT/JP2024/001351
(87) International publication number: WO 2024/154807

(57) **Abstract**

Provided is a tetrafluoroethylene-based polymer composition for use in an electrochemical device binder, the tetrafluoroethylene-based polymer composition being homogenously mixable with powder components in electrochemical devices and being capable of providing a mixture sheet having excellent strength and excellent flexibility. Also provided are an electrochemical device binder, an electrode mixture, an electrode, and a secondary battery each containing the tetrafluoroethylene-based polymer composition. The present invention relates to a tetrafluoroethylene-based polymer composition for use in an electrochemical device binder, the tetrafluoroethylene-based polymer composition having endothermic peaks in a region (A) of 330°C or higher and lower than 340°C and in a region (B) of 340°C or higher and 350°C or lower in differential scanning calorimetry.

## Description

### TECHNICAL FIELD

The disclosure relates to tetrafluoroethylene-based polymer compositions, electrochemical device binders, electrode mixtures, electrodes, and secondary batteries.

### BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in electrochemical device characteristics are desired.

Patent Literature 1 discloses an energy storage device in which at least one of the cathode or the anode includes a polytetrafluoroethylene composite binder material.

Patent Literature documents 2 to 6 each describe use of polytetrafluoroethylene as a binder for batteries.

Patent Literature 7 discloses the use of a mixture of polytetrafluoroethylene and polyvinylidene fluoride as a binder in batteries.

### CITATION LIST

### - Patent Literature

Patent Literature 1: JP 2017-517862 T
Patent Literature 2: WO 2021/181887 A1
Patent Literature 3: WO 2021/181888 A1
Patent Literature 4: WO 2021/192541 A1
Patent Literature 5: WO 2022/138942 A1
Patent Literature 6: WO 2022/138939 A1
Patent Literature 7: WO 2022/234227 A1

### SUMMARY OF INVENTION

### - Technical Problem

The disclosure aims to provide a tetrafluoroethylene-based polymer composition for use in an electrochemical device binder, the tetrafluoroethylene-based polymer composition being homogenously mixable with powder components in electrochemical devices and being capable of providing a mixture sheet having excellent strength and excellent flexibility. The disclosure also aims to provide an electrochemical device binder, an electrode mixture, an electrode, and a secondary battery each containing the tetrafluoroethylene-based polymer composition.

### - Solution to Problem

The disclosure (1) relates to a tetrafluoroethylene-based polymer composition for use in an electrochemical device binder,
the tetrafluoroethylene-based polymer composition having endothermic peaks in a region (A) of 330°C or higher and lower than 340°C and in a region (B) of 340°C or higher and 350°C or lower in differential scanning calorimetry.

The disclosure (2) relates to an electrochemical device binder consisting essentially of a tetrafluoroethylene-based polymer composition,
the tetrafluoroethylene-based polymer composition having endothermic peaks in a region (A) of 330°C or higher and lower than 340°C and in a region (B) of 340°C or higher and 350°C or lower in differential scanning calorimetry.

The disclosure (3) relates to the electrochemical device binder according to the disclosure (2),
wherein the tetrafluoroethylene-based polymer composition has an intensity ratio represented by an endothermic peak intensity in the region (A)/an endothermic peak intensity in the region (B) of 0.5 or more.

The disclosure (4) relates to the electrochemical device binder according to the disclosure (3),
wherein the tetrafluoroethylene-based polymer composition has the intensity ratio represented by the endothermic peak intensity in the region (A)/the endothermic peak intensity in the region (B) of 0.8 to 2.0.

The disclosure (5) relates to the electrochemical device binder according to any one of the disclosures (2) to (4),
wherein the tetrafluoroethylene-based polymer composition includes a tetrafluoroethylene copolymer containing a tetrafluoroethylene unit and a modifying monomer unit based on a modifying monomer copolymerizable with tetrafluoroethylene.

The disclosure (6) relates to the electrochemical device binder according to the disclosure (5),
wherein the modifying monomer unit is contained in the tetrafluoroethylene copolymer in an amount of 10% by mass or less relative to all polymerized units.

The disclosure (7) relates to the electrochemical device binder according to any one of the disclosures (2) to (6),
wherein the tetrafluoroethylene-based polymer composition contains a tetrafluoroethylene unit and a modifying monomer unit based on a modifying monomer copolymerizable with tetrafluoroethylene.

The disclosure (8) relates to the electrochemical device binder according to the disclosure (7),
wherein the modifying monomer unit is contained in the tetrafluoroethylene-based polymer composition in an amount of 0.20% by mass or less relative to all polymerized units.

The disclosure (9) relates to the electrochemical device binder according to any one of the disclosures (5) to (8),
wherein the modifying monomer is a compound represented by the following formula (I):

CX¹X²= CX³X⁴ (I)

wherein X¹ to X³ are each independently H or F and X⁴ is F, Cl, Rf, or O-Rf, where Rf is a perfluoro organic group.

The disclosure (10) relates to the electrochemical device binder according to the disclosure (9),
wherein the modifying monomer includes at least one selected from the group consisting of chlorotrifluoroethylene and hexafluoropropylene.

The disclosure (11) relates to the electrochemical device binder according to any one of the disclosures (2) to (10),
wherein the tetrafluoroethylene-based polymer composition is expandable.

The disclosure (12) relates to the electrochemical device binder according to any one of the disclosures (2) to (11),
wherein the tetrafluoroethylene-based polymer composition includes a tetrafluoroethylene copolymer having an extrusion pressure of 75 MPa or lower at a reduction ratio of 1000.

The disclosure (13) relates to the electrochemical device binder according to any one of the disclosures (2) to (12),
wherein the tetrafluoroethylene-based polymer composition is in a powder form.

The disclosure (14) relates to the electrochemical device binder according to any one of the disclosures (2) to (13),
wherein the tetrafluoroethylene-based polymer composition is substantially free from water.

The disclosure (15) relates to the electrochemical device binder according to any one of the disclosures (2) to (14),
wherein the tetrafluoroethylene-based polymer composition is substantially free from a fluorine-containing compound having a molecular weight of 1000 or less.

The disclosure (16) relates to the electrochemical device binder according to any one of the disclosures (2) to (15),
wherein the tetrafluoroethylene-based polymer composition contains a fluoropolymer in an amount of 90% by mass or more relative to the tetrafluoroethylene-based polymer composition.

The disclosure (17) relates to the electrochemical device binder according to any one of the disclosures (2) to (16),
wherein the tetrafluoroethylene-based polymer composition includes two or more tetrafluoroethylene-based polymers.

The disclosure (18) relates to the electrochemical device binder according to any one of the disclosures (2) to (17),
wherein the tetrafluoroethylene-based polymers in the tetrafluoroethylene-based polymer composition include polytetrafluoroethylene.

The disclosure (19) relates to the electrochemical device binder according to any one of the disclosures (2) to (18),
wherein the fluoropolymer composition in a powder form has an average aspect ratio of 2.5 or less.

The disclosure (20) relates to an electrode mixture containing:
an electrode active material; and
the tetrafluoroethylene-based polymer composition according to the disclosure (1) or the electrochemical device binder according to any one of the disclosures (2) to (19) .

The disclosure (21) relates to the electrode mixture according to the disclosure (20), which is in a sheet form.

The disclosure (22) relates to an electrode including:
an electrode active material;
a current collector; and
the tetrafluoroethylene-based polymer composition according to the disclosure (1) or the electrochemical device binder according to any one of the disclosures (2) to (19) .

The disclosure (23) relates to a secondary battery including the electrode according to the disclosure (22).

### - Advantageous Effects of Invention

The disclosure can provide a tetrafluoroethylene-based polymer composition for use in an electrochemical device binder, the tetrafluoroethylene-based polymer composition being homogenously mixable with powder components in electrochemical devices and being capable of providing a mixture sheet having excellent strength and excellent flexibility. The disclosure can also provide an electrochemical device binder, an electrode mixture, an electrode, and a secondary battery each containing the tetrafluoroethylene-based polymer composition.

### BRIEF DESCRIPTION OF DRAWINGS

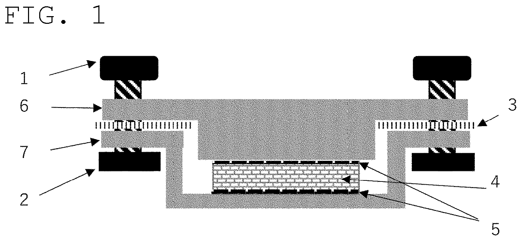

FIG. 1 is a schematic cross-sectional view of a pressure cell used in ion-conductivity measurement of solid electrolyte mixture sheets in EXAMPLES.

### DESCRIPTION OF EMBODIMENTS

The disclosure will be specifically described hereinbelow.

The disclosure provides a tetrafluoroethylene (TFE)-based polymer composition for use in an electrochemical device binder, the TFE-based polymer composition having endothermic peaks in a region (A) of 330°C or higher and lower than 340°C and in a region (B) of 340°C or higher and 350°C or lower in differential scanning calorimetry.

The TFE-based polymer composition of the disclosure having endothermic peaks in the regions (A) and (B) is less likely to form aggregates with powder components in electrochemical devices, such as electrode active materials and solid electrolytes, even if they are kneaded for a long time. It is homogenously mixable with the powder components. Also, the TFE-based polymer composition can provide a mixture sheet having excellent strength and excellent flexibility.

The TFE-based polymer composition of the disclosure does not require a large amount of a dispersion medium such as water or an organic solvent and can be combined with a wide range of electrode active materials and solid electrolytes, which is advantageous in terms of the production process. The process and cost derived from use of a dispersion medium can be reduced.

Further, since the TFE-based polymer composition of the disclosure has a high binding force to active materials and electrolytes, the use amount thereof can be reduced.

The TFE-based polymer composition of the disclosure has endothermic peaks in the region (A) and the region (B) in differential scanning calorimetry [DSC].

This indicates that the TFE-based polymer composition of the disclosure contains a TFE-based polymer (A) having an endothermic peak in the region (A) and a TFE-based polymer (B) having an endothermic peak in the region (B).

The TFE-based polymer (A) having an endothermic peak in the region (A) has low fibrillation properties. Thus, fibrillation of the TFE-based polymer composition containing the TFE-based polymer is reduced, and the TFE-based polymer composition is less likely to form aggregates with powder components in electrochemical devices, even if they are kneaded for a long time. This can achieve homogeneous mixing with the powder components and provide mixture sheets having improved strength and improved flexibility.

The temperature range of the region (A) is 330°C or higher and lower than 340°C, preferably 333°C or higher, more preferably 336°C or higher.

The temperature range of the region (B) is 340°C or higher 350°C or lower, preferably 348°C or lower, more preferably 346°C or lower.

The endothermic peak temperatures are defined as the temperatures corresponding to the minimum points in the region (A) and the region (B) on a heat-of-fusion curve obtained by performing differential scanning calorimetry (DSC) at a temperature-increasing rate of 2°C/min on a TFE-based polymer composition that has never been heated to a temperature of 300°C or higher.

To achieve further homogeneous mixing with powder components in electrochemical devices and to provide mixture sheets with higher strength and higher flexibility, the TFE-based polymer composition of the disclosure preferably has an intensity ratio represented by an endothermic peak intensity in the region (A)/an endothermic peak intensity in the region (B) of 0.5 or more, more preferably 0.6 or more, still more preferably 0.7 or more, further more preferably 0.8 or more, while preferably 3.0 or less, more preferably 2.5 or less, still more preferably 2.0 or less, further more preferably 1.5 or less.

Each endothermic peak intensity is determined as the distance between a minimum point (a) and an intersection point (b), where the minimum point (a) is a minimum point on the heat-of-fusion curve in the measurement of the endothermic peak temperature and the intersection point (b) is an intersection of a line passing through the minimum point (a) and perpendicular to the horizontal axis (temperature) with a line connecting the points at 305°C and 355°C on the heat of fusion curve.

The intensity ratio can be adjusted by adjusting the mixing ratio of the TFE-based polymer (A) having an endothermic peak in the region (A) and the TFE-based polymer (B) having an endothermic peak in the region (B).

The TFE-based polymer composition of the disclosure contains a TFE-based polymer. The TFE-based polymer composition of the disclosure preferably contains two or more TFE-based polymers, more preferably two TFE-based polymers. The TFE-based polymer composition of the disclosure preferably contains the TFE-based polymers (A) and (B) as the two or more TFE-based polymers.

The TFE-based polymers may include a homopolymer of tetrafluoroethylene (TFE) or a TFE copolymer containing a polymerized unit based on TFE (TFE unit) and a polymerized unit based on a modifying monomer copolymerizable with TFE (hereinafter, also referred to as a "modifying monomer unit").

The TFE homopolymer refers to one in which the amount of a modifying monomer unit in all polymerized units is less than 0.0001% by mass.

The TFE copolymer herein may contain 90.0% by mass or more of the TFE unit and 10.0% by mass or less of the modifying monomer unit. The TFE copolymer may consist of the TFE unit and the modifying monomer unit.

To achieve further homogeneous mixing with powder components in electrochemical devices and to provide mixture sheets with higher strength and higher flexibility, the TFE-based polymer composition of the disclosure preferably contains the TFE copolymer.

At least one of the TFE-based polymer (A) having an endothermic peak in the region (A) or the TFE-based polymer (B) having an endothermic peak in the region (B) is preferably a TFE copolymer, at least the TFE-based polymer (A) is more preferably a TFE copolymer, and both the TFE-based polymers (A) and (B) are further preferably TFE copolymers.

The TFE-based polymers preferably include polytetrafluoroethylene (PTFE). The PTFE may include a TFE homopolymer and a modified PTFE containing 99.0% by mass or more of the TFE unit and 1.0% by mass or less of the modifying monomer unit. The modified PTFE may consist of the TFE unit and the modifying monomer unit.

At least one of the TFE-based polymer (A) or the TFE-based polymer (B) is preferably a modified PTFE, at least the TFE-based polymer (A) is a modified PTFE, and both the TFE-based polymers (A) and (B) are each further preferably a modified PTFE.

To achieve further homogeneous mixing with powder components in electrochemical devices and to provide mixture sheets with higher strength and higher flexibility, the TFE copolymer preferably contains the modifying monomer unit in an amount falling within a range of 0.0001 to 10.0% by mass relative to all polymerized units. The lower limit of the amount of the modifying monomer unit is more preferably 0.001% by mass, still more preferably 0.010% by mass, further more preferably 0.050% by mass. The upper limit of the amount of the modifying monomer unit is preferably 5.0% by mass, more preferably 3.0% by mass, still more preferably 1.0% by mass, further more preferably 0.80% by mass, further more preferably 0.60% by mass, further more preferably 0.50% by mass, further more preferably 0.40% by mass, further more preferably 0.30% by mass, particularly preferably 0.20% by mass.

The modifying monomer unit as used herein means a portion constituting the molecular structure of the TFE-based polymer and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; a (perfluoroalkyl)ethylene; and ethylene. One modifying monomer may be used alone or two or more modifying monomers may be used in combination.

The perfluorovinyl ether may be, but is not limited to, an unsaturated perfluoro compound represented by the following formula (A):

CF₂=CF-ORf¹ (A)

wherein Rf¹ is a perfluoro organic group. The "perfluoro organic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ether) (PAVE) represented by the formula (A) wherein Rf¹ is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include: those represented by the formula (A) wherein Rf¹ is a C4-C9 perfluoro(alkoxyalkyl) group; those represented by the formula (A) wherein Rf¹ is a group represented by the following formula: 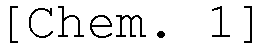 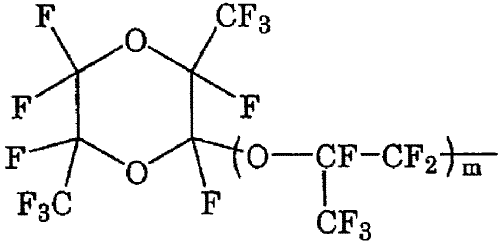 wherein m is 0 or an integer of 1 to 4; and those represented by the formula (A) wherein Rf¹ is a group represented by the following formula: 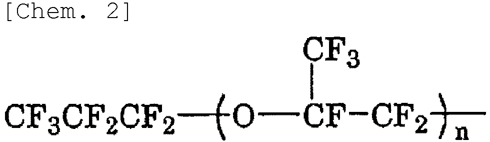 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

CF₂=CF-CF₂-ORf² (B)

wherein Rf² is a perfluoro organic group.

Rf² is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The modifying monomer is preferably a compound represented by the following formula (I): CX¹X²=CX³X⁴ (I) wherein X¹ to X³ are each independently H or F and X⁴ is F, Cl, Rf, or O-Rf, where Rf is a perfluoro organic group.

Rf in the formula (I) is preferably a C1-C10 perfluoroalkyl group, more preferably a C1-C5 perfluoroalkyl group, still more preferably a C1-C4 perfluoroalkyl group.

To achieve further homogeneous mixing with powder components in electrochemical devices and to provide mixture sheets with higher strength and higher flexibility, the modifying monomer is preferably at least one selected from the group consisting of CTFE, HFP, perfluoro(methyl vinyl ether) (PMVE), perfluoro(propyl vinyl ether) (PPVE), PFBE, and VDF, more preferably at least one selected from the group consisting of CTFE, HFP, PMVE, and PPVE, still more preferably at least one selected from the group consisting of CTFE, HFP, and PPVE, particularly preferably at least one selected from the group consisting of CTFE and HFP.

The TFE-based polymers in the TFE-based polymer composition of the disclosure may have a core-shell structure. An example of the TFE-based polymers having a core-shell structure is a TFE copolymer including a core of a high-molecular-weight TFE-based polymer and a shell of a lower-molecular-weight TFE-based polymer or TFE copolymer in a particle. Preferred is a modified PTFE. An example of such a modified PTFE is a PTFE disclosed in JP 2005-527652 T.

To achieve further homogeneous mixing with powder components in electrochemical devices and to provide mixture sheets with higher strength and higher flexibility, the TFE-based polymer composition of the disclosure preferably contains a TFE copolymer having an extrusion pressure of 75 MPa or lower at a reduction ratio (RR) of 1000.

The extrusion pressure at a RR of 1000 is more preferably 70 MPa or lower, still more preferably 60 MPa or lower, further more preferably 50 MPa or lower, particularly preferably 40 MPa or lower, while preferably 20 MPa or higher, more preferably 30 MPa or higher.

The extrusion pressure at a RR of 1000 is measured by the following method.

An amount of 60 g of a TFE-based polymer and 12.3 g of a hydrocarbon oil (trade name: Isopar G (registered trademark), ExxonMobil Corp.) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 20 mm/min. The ratio of the cross-sectional area of the cylinder to the cross-sectional area of the orifice is 1000. The value obtained by dividing the load (N) at which the pressure is in equilibrium in the latter half of the extrusion operation by the cylinder cross-sectional area is defined as the extrusion pressure (MPa) .

The TFE-based polymer (A) having an endothermic peak in the region (A) is preferably a TFE copolymer having an extrusion pressure of 75 MPa or lower at a RR of 1000, more preferably a modified PTFE.

The TFE-based polymer (A) having an endothermic peak in the region (A) or the TFE-based polymer having an extrusion pressure of 75 MPa or lower at a RR of 1000 preferably has a core-shell structure. This can achieve further homogeneous mixing with powder components in electrochemical devices and provide mixture sheets with higher strength and higher flexibility.

In the core-shell structure, the core and the shell do not necessarily have a clear boundary between them. The TFE-based polymer in the core may be mingled with the TFE-based polymer in the shell at or around the boundary between the core and the shell.

The core in the core-shell structure preferably includes a TFE copolymer having a polymerized unit based on a modifying monomer, and more preferably includes a modified PTFE.

The modifying monomer in the core is preferably at least one selected from the group consisting of fluoro(alkyl vinyl ethers), vinyl heterocycles, and fluoroolefins, more preferably at least one selected from the group consisting of fluoro(alkyl vinyl ethers) and fluoroolefins, still more preferably at least one selected from the group consisting of PAVE, HFP, and CTFE, further preferably at least one selected from the group consisting of PAVE and CTFE, particularly preferably CTFE.

PAVE is preferably perfluoro(propyl vinyl ether) (PPVE).

The shell in the core-shell structure preferably includes a TFE copolymer having a polymerized unit based on a modifying monomer and/or a TFE-based copolymer obtained by polymerization using a chain transfer agent, more preferably a modified PTFE.

The modifying monomer in the shell preferably includes at least one selected from the group consisting of fluoro(alkyl vinyl ethers) and fluoroolefins, more preferably at least one selected from the group consisting of PAVE, HFP, and CTFE, still more preferably at least one selected from the group consisting of HFP and CTFE, further more preferably CTFE.

The chain transfer agent may be any agent that can reduce the molecular weight of the TFE-based polymer constituting the shell. Examples thereof include those containing non-peroxidized organic compounds such as water-soluble alcohols, hydrocarbons, and fluorinated hydrocarbons, water-soluble organic peroxides such as disuccinic peroxide (DSP), and persulfates such as ammonium persulfate (APS) and potassium persulfate (KPS).

The chain transfer agent contains at least one of a non-peroxidized organic compound, a water-soluble organic peroxide, or a persulfate.

The chain transfer agent may contain one or two or more of each of the non-peroxidized organic compound, the water-soluble organic peroxide, and the persulfate.

In terms of good dispersibility and uniformity in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane, particularly preferably methanol.

The TFE-based polymer (A) having an endothermic peak in the region (A) preferably has a standard specific gravity (SSG) of 2.160 or more, more preferably 2.165 or more, while preferably 2.200 or less, more preferably 2.190 or less, still more preferably 2.185 or less, further more preferably 2.180 or less, particularly preferably 2.175 or less.

The TFE-based polymer (B) having an endothermic peak in the region (B) preferably has a SSG of less than 2.160, more preferably 2.155 or less, while preferably 2.130 or more, more preferably 2.140 or more, still more preferably 2.145 or more.

The SSG is determined by the water displacement method in conformity with ASTM D792 using a sample molded in conformity with ASTM D4895.

The mass ratio (TFE-based polymer (A)/TFE-based polymer (B)) of the TFE-based polymer (A) having an endothermic peak in the region (A) to the TFE-based polymer (B) having an endothermic peak in the region (B) is preferably 1/99 or more, more preferably 5/95 or more, still more preferably 10/90 or more, further more preferably 15/85 or more, further more preferably 20/80 or more, particularly preferably 30/70 or more, while more preferably 60/40 or less, more preferably 55/45 or less, still more preferably 50/50 or less.

The TFE-based polymer composition of the disclosure preferably contains a fluoropolymer in an amount of 90% by mass or more relative to the TFE-based polymer composition.

The fluoropolymer may contain a TFE-based polymer, and may further contain a fluoropolymer other than the TFE-based polymer.

The amount of the fluoropolymer is the total amount of the TFE-based polymer and the fluoropolymer other than the TFE-based polymer.

Examples of the fluoropolymer other than the TFE-based polymer include vinylidene fluoride (VdF)-based polymers. Examples of the VdF-based polymers include VdF-based resins such as polyvinylidene fluoride (PVdF) and a VdF/TFE copolymer (VT) and VdF-based elastomers such as a VdF/HFP copolymer, a VdF/TFE/HFP copolymer, and a VdF/2,3,3,3-tetrafluoropropylene copolymer.

The TFE-based polymer composition of the disclosure preferably consists essentially of the fluoropolymer. This allows remarkable exertion of the effect attributable to the fluoropolymer.

The phrase "consists essentially of the fluoropolymer" means that the total amount of the fluoropolymer relative to the fluoropolymer composition is 95.0% by mass or more.

The amount of the fluoropolymer relative to the fluoropolymer composition is preferably 98.0% by mass or more, more preferably 99.0% by mass or more, still more preferably 99.5% by mass or more, particularly preferably 99.9% by mass or more, most preferably 99.95% by mass or more.

The fluoropolymer composition of the disclosure also preferably consists of the fluoropolymer.

The TFE-based polymer composition of the disclosure preferably consists essentially of the TFE-based polymers. This allows remarkable exertion of the effect attributable to the TFE-based polymers. The phrase "consists essentially of the TFE-based polymers" means that the amount of the TFE-based polymers relative to the TFE-based polymer composition is 95.0% by mass or more.

The amount of the TFE-based polymers relative to the TFE-based polymer composition is preferably 98.0% by mass or more, more preferably 99.0% by mass or more, still more preferably 99.5% by mass or more, particularly preferably 99.9% by mass or more, most preferably 99.95% by mass or more.

The TFE-based polymer composition of the disclosure also preferably consists of the TFE-based polymers.

The TFE-based polymer composition of the disclosure preferably consists essentially of the two or more TFE-based polymers. Thereby, the effect attributable to the two or more TFE-based polymers can be significantly exerted. The phrase "consists essentially of the two or more TFE-based polymers" means that the amount of the two or more TFE-based polymers relative to the TFE-based polymer composition is 95% by mass or more.

The amount of the two or more TFE-based polymers relative to the TFE-based polymer composition is preferably 98.0% by mass or more, more preferably 99.0% by mass or more, still more preferably 99.5% by mass or more, particularly preferably 99.9% by mass or more, most preferably 99.95% by mass or more.

The TFE-based polymer composition of the disclosure also preferably consists of the two or more TFE-based polymers.

The TFE-based polymer composition of the disclosure also preferably consists essentially of the TFE-based polymer (A) having an endothermic peak in the region (A) and the TFE-based polymer (B) having an endothermic peak in the region (B). This allows remarkable exertion of the effect attributable to the TFE-based polymers (A) and (B). The phrase "consists essentially of the TFE-based polymers (A) and (B)" means that the total amount of the TFE-based polymers (A) and (B) relative to the TFE-based polymer composition is 95% by mass or more.

The total amount of the TFE-based polymers (A) and (B) relative to the TFE-based polymer composition is preferably 98.0% by mass or more, more preferably 99.0% by mass or more, still more preferably 99.5% by mass or more, particularly preferably 99.9% by mass or more, most preferably 99.95% by mass or more.

The TFE-based polymer composition of the disclosure also preferably consists of the TFE-based polymers (A) and (B) .

The TFE-based polymer composition of the disclosure preferably contains a TFE unit and a modifying monomer unit based on a modifying monomer copolymerizable with TFE. The modifying monomer may be any of those mentioned above.

The TFE-based polymer composition of the disclosure may contain the TFE unit in an amount of 90.0% by mass or more and the modified monomer unit in an amount of 10.0% by mass or less relative to all polymerized units, and preferably contains the TFE unit in an amount of 99.0% by mass or more and the modified monomer unit in an amount of 1.0% by mass or less.

The TFE-based polymer composition of the disclosure may consist of the TFE unit and the modified monomer unit as polymerized units.

To achieve further homogeneous mixing with powder components in electrochemical devices and to provide mixture sheets with higher strength and higher flexibility, the amount of the modified monomer unit in the TFE-based polymer composition of the disclosure is preferably in the range of 0.0001 to 10.0 % by mass relative to all polymerized units. The lower limit of the amount of the modifying monomer unit is more preferably 0.001% by mass, still more preferably 0.010% by mass, further more preferably 0.050% by mass. The upper limit of the amount of the modifying monomer unit is preferably 5.0% by mass, more preferably 3.0% by mass, still more preferably 1.0% by mass, further more preferably 0.80% by mass, further more preferably 0.60% by mass, further more preferably 0.50% by mass, further more preferably 0.40% by mass, further more preferably 0.30% by mass, particularly preferably 0.20% by mass.

The TFE-based polymer composition of the disclosure may contain a conductive aid.

Any known conductive material can be used as the conductive aid. Specific examples include metal materials such as copper and nickel, and carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these materials may be used alone or two or more thereof may be used in any combination at any ratio.

When the TFE-based polymer composition of the disclosure contains a conductive aid, the amount of the conductive aid is preferably 1% by mass or more, more preferably 5% by mass or more, still more preferably, 10% by mass or more relative to the TFE-based polymer composition. The upper limit thereof is preferably 50% by mass or less, more preferably 30% by mass or less, still more preferably 20% by mass or less.

The TFE-based polymer composition of the disclosure is preferably substantially free from water. This can reduce or prevent gas generation and deterioration of the electrochemical device properties. Moreover, the electrode active material or solid electrolyte to be used together can be selected from a wide range of selections, which is advantageous in terms of the production process. The phrase "substantially free from water" means that the water content of the TFE-based polymer composition is 0.010% by mass or less.

The water content is preferably 0.005% by mass or less, more preferably 0.003% by mass or less, still more preferably 0.002% by mass or less, further more preferably 0.001% by mass or less.

The water content is determined by the following method.

The mass of the TFE-based polymer composition is weighed before and after heating at 150°C for two hours, and the water content is calculated by the following expression. The sample is taken three times, and this calculation is performed for each sample and the values are averaged. Water content (% by mass) = [(mass (g) of TFE-based polymer composition before heating) - (mass (g) of TFE-based polymer composition after heating)]/(mass (g) of TFE-based polymer composition before heating) × 100

The TFE-based polymer composition of the disclosure is preferably substantially free from a fluorine-containing compound having a molecular weight of 1000 or less. The phrase "substantially free from a fluorine-containing compound" means that the amount of the fluorine-containing compound is 25 ppb by mass or less relative to the TFE-based polymer composition.

The amount of the fluorine-containing compound is preferably 20 ppb by mass or less, more preferably 15 ppb by mass or less, still more preferably 10 ppb by mass or less, further more preferably less than 10 ppb by mass, further more preferably 1 ppb by mass or less, further more preferably less than 1 ppb by mass, particularly preferably below the lower limit of quantitation. The lower limit is not limited, and may be an amount below the lower limit of quantitation.

The amount of the fluorine-containing compound having a molecular weight of 1000 or less is measured by the following method.

To a 1-g portion of a sample weighed is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to the TFE-based polymer. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include the TFE-based polymer.

The hydrophilic group may be, for example, -COOM, - SO₂M, or -SO₃M, and examples include anionic groups such as -COOM and -SO₃M wherein M is H, a metal atom, NR¹₄, imidazolium optionally containing a substituent, pyridinium optionally containing a substituent, or phosphonium optionally containing a substituent; and R¹ is H or an organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of F(CF₂)ₙ₁COOM, the anionic portion refers to the portion "F(CF₂)ₙ₁COO".

Examples of the anionic fluorine-containing surfactant include a compound represented by the following formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group containing 3 to 20 carbon atoms in which some or all of Hs are replaced by F; the alkylene group optionally containing one or more ether bonds in which some of Hs are replaced by Cl; and Y° is an anionic group.

The anionic group for Y° may be -COOM, -SO₂M, or - SO₃M, and may be -COOM or -SO₃M.

M is H, a metal atom, NR¹₄, imidazolium optionally containing a substituent, pyridinium optionally containing a substituent, or phosphonium optionally containing a substituent, wherein R¹ is H or an organic group.

Examples of the metal atom include an alkali metal (Group 1) and an alkaline earth metal (Group 2), such as Na, K, and Li.

R¹ may be H or a C₁₋₁₀ organic group, may be H or a C₁₋₄ organic group, and may be H or a C₁₋₄ alkyl group.

M may be H, a metal atom, or NR¹₄, may be H, an alkali metal (Group 1), an alkaline earth metal (Group 2), or NR¹₄, and may be H, Na, K, Li, or NH₄.

In Rfⁿ⁰, 50% or more of H atoms may be replaced by fluorine.

The fluorine-containing surfactant may be a single fluorine-containing surfactant or a mixture containing two or more fluorine-containing surfactants.

Examples of the fluorine-containing surfactant include compounds represented by the following formulas. The fluorine-containing surfactant may be a mixture of these compounds:
F(CF₂)₇COOM,
F(CF₂)₅COOM,
H(CF₂)₆COOM,
H(CF₂)₇COOM,
CF₃O(CF₂)₃OCHFCF₂COOM,
C₃F₇OCF(CF₃)CF₂OCF(CF₃)COOM,
CF₃CF₂CF₂OCF(CF₃)COOM,
CF₃CF₂OCF₂CF₂OCF₂COOM,
C₂F₅OCF(CF₃)CF₂OCF(CF₃)COOM,
CF₃OCF(CF₃)CF₂OCF(CF₃)COOM,
CF₂ClCF₂CF₂OCF(CF₃)CF₂OCF₂COOM,
CF₂ClCF₂CF₂OCF₂CF(CF₃)OCF₂COOM,
CF₂ClCF(CF₃)OCF(CF₃)CF₂OCF₂COOM,
CF₂ClCF(CF₃)OCF₂CF(CF₃)OCF₂COOM, and

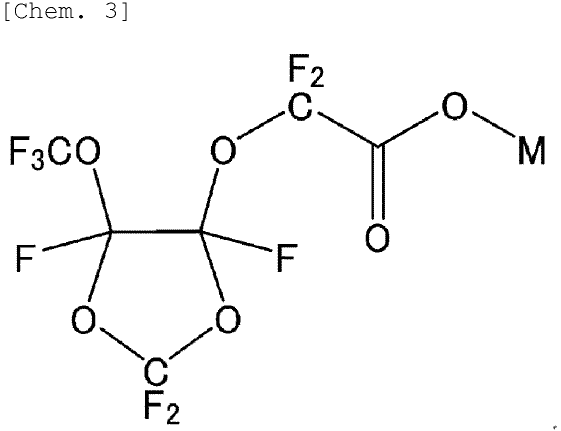

In the formulas, M is H, a metal atom, NR¹₄, imidazolium optionally containing a substituent, pyridinium optionally containing a substituent, or phosphonium optionally containing a substituent; and R¹ is H or an organic group.

The TFE-based polymer composition of the disclosure is preferably substantially free from any of the fluorine-containing compounds represented by the above formulas.

In each of the above formulas, M may be H, a metal atom, or NR¹₄, may be H, an alkali metal (Group 1), an alkaline earth metal (Group 2), or NR¹₄, or may be H, Na, K, Li, or NH₄.

R¹ may be H or a C₁₋₁₀ organic group, may be H or a C₁₋₄ organic group, or may be H or a C₁₋₄ alkyl group.

The TFE-based polymer composition of the disclosure substantially free from any of the fluorine-containing compounds represented by the above formulas can further reduce or prevent gas generation and deterioration of the electrochemical device properties.

The phrase "substantially free from any of the fluorine-containing compounds represented by the above formulas" means that the amount of any of the fluorine-containing compounds is 25 ppb by mass or less relative to the TFE-based polymer composition.

The amount of the fluorine-containing compound is preferably 20 ppb by mass or less, more preferably 15 ppb by mass or less, still more preferably 10 ppb by mass or less, further more preferably less than 10 ppb by mass, further more preferably 1 ppb by mass or less, further more preferably less than 1 ppb by mass, particularly preferably below the lower limit of quantitation. The lower limit is not limited, and may be an amount below the lower limit of quantitation.

The TFE-based polymer composition of the disclosure is also preferably substantially free from a fluorine-containing compound represented by the following formula:

[Cₙ₋₁F₂ₙ₋₁COO⁻]M⁺

wherein n is an integer of 9 to 14, preferably 9 to 12; and M⁺ is a cation. This can further reduce or prevent gas generation and deterioration of the electrochemical device properties.

M constituting the cation M⁺ in the formula is the same as M mentioned above.

The phrase "substantially free from the fluorine-containing compound represented by the above formula" means that the amount of the fluorine-containing compound is 25 ppb by mass or less relative to the TFE-based polymer composition.

The amount of the fluorine-containing compound is preferably 20 ppb by mass or less, more preferably 15 ppb by mass or less, still more preferably 10 ppb by mass or less, further more preferably less than 10 ppb by mass, further more preferably 1 ppb by mass or less, further more preferably less than 1 ppb by mass, particularly preferably below the lower limit of quantitation. The lower limit is not limited, and may be an amount below the lower limit of quantitation.

To achieve further homogeneous mixing with powder components in electrochemical devices and to provide mixture sheets with higher strength and higher flexibility, the TFE-based polymer composition of the disclosure is preferably expandable.

According to JP 2002-201217 A, the following procedures are performed. To 100 g of the TFE-based polymer composition is added 21.7 g of a lubricant (trade name: Isopar H (registered trademark), ExxonMobil Corp.), followed by mixing for three minutes. The mixture is allowed to stand in a thermostatic chamber at 25°C for two hours, and then paste-extruded through an orifice (diameter 2.5 mm, land length 1.1 cm, introduction angle 30°) at 25°C under the conditions of a reduction ratio (ratio between the cross-sectional area of the die inlet and the cross-sectional area of the die outlet) of 100 and an extrusion speed of 51 cm/min. Thereby, a beading is obtained. The beading is dried at 230°C for 30 minutes, whereby the lubricant is removed from the beading. The dried beading is cut into appropriate lengths and each of the resulting samples is clamped at each end with a gap between the clamps of 3.8 cm, followed by heating to 300°C in an air-circulating furnace. The clamps are then moved apart at an expansion speed of 1000%/sec until the separation distance corresponds to a total degree of stretching of 2400%. The "total degree of stretching" shows the increase in length attributable to expansion relative to the beading length (100%) before the expansion test. If no breakage occurs during the expansion, it is considered to be expandable, and if breakage occurs during the expansion, it is considered to be non-expandable.

Whether or not the TFE-based polymer composition is expandable is preferably confirmed by the above-described method, but can also be confirmed by the following method.

An amount of 50 g of the TFE-based polymer composition is mixed with 10.25 of a hydrocarbon oil (trade name: Isopar E (registered trademark), ExxonMobil Corp.) as an extruding aid in a polyethylene container for three minutes. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice is 100. The beading obtained is dried at 230°C for 30 minutes, whereby the lubricant is removed from the beading. The dried beading is cut into appropriate lengths and placed in a furnace heated to 300°C. The cut beadings are expanded in the furnace at an expansion speed of 100%/sec until the beading length reaches 25 times the length before the expansion test. If no breakage occurs during the expansion, the beading is considered to be expandable, and if breakage occurs during the expansion, the beading is considered to be non-expandable.

The TFE-based polymer composition of the disclosure preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

To achieve further homogeneous mixing with powder components in electrochemical devices and to provide mixture sheets with higher strength and higher flexibility, the TFE-based polymer composition of the disclosure has a standard specific gravity (SSG) of preferably 2.200 or less, more preferably 2.190 or less, still more preferably 2.180 or less, further preferably 2.175 or less, while preferably 2.130 or more, more preferably 2.140 or more, still more preferably 2.150 or more.

The SSG is determined by the water displacement method in conformity with ASTM D792 using a sample molded in conformity with ASTM D4895.

To achieve further homogeneous mixing with powder components in electrochemical devices and to provide mixture sheets with higher strength and higher flexibility, the TFE-based polymer composition of the disclosure preferably has an extrusion pressure at a reduction ratio (RR) of 200 of 10 MPa or higher, more preferably 15 MPa or higher, while preferably 50 MPa or lower, more preferably 40 MPa or lower, still more preferably 35 MPa or lower.

The extrusion pressure at a RR of 200 is measured by the following method.

An amount of 60 g of the TFE-based polymer composition and 12.3 g of a hydrocarbon oil (trade name: Isopar G (registered trademark), ExxonMobil Corp.) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 20 mm/min. The ratio of the cross-sectional area of the cylinder to the cross-sectional area of the orifice is 200. The value obtained by dividing the load (N) at which the pressure is in equilibrium in the latter half of the extrusion operation by the cylinder cross-sectional area is defined as the extrusion pressure (MPa).

The TFE-based polymer composition of the disclosure may be in any form, and is preferably in a powder form so that it can be mixed with an electrode active material or a solid electrolyte without a large amount of dispersion medium.

The TFE-based polymer composition may be in a form other than powder, such as a dispersion.

To achieve excellent powder fluidity and excellent uniformity of the mixture sheet strength, the TFE-based polymer composition of the disclosure in a powder form preferably has an average aspect ratio of 2.5 or less, more preferably 2.0 or less, still more preferably 1.8 or less, still more preferably 1.5 or less, while preferably 1.0 or more, more preferably 1.1 or more. The TFE-based polymer composition in this case may be in a powder form.

The average aspect ratio of the powder is determined as follows: the powder is thinly spread on a black paper surface with air without applying shear to the powder, the spread powder is observed using a microscope, and the average is taken over the ratios of the long axis to the short axis of 100 or more powder particles selected at random.

The TFE-based polymer composition of the disclosure may have an average secondary particle size of 350 um or greater, preferably 400 um or greater, more preferably 450 um or greater, still more preferably 500 um or greater, while preferably 1000 um or smaller, more preferably 900 um or smaller, still more preferably 800 um or smaller, further more preferably 700 um or smaller.

The average secondary particle size is measured in conformity with JIS K 6891.

In order to achieve excellent handleability, the TFE-based polymer composition of the disclosure preferably has an apparent density of 0.40 g/mL or higher, more preferably 0.43 g/mL or higher, still more preferably 0.45 g/mL or higher. The upper limit is not limited, and may be 0.70 g/mL.

The apparent density is determined in conformity with JIS K 6892.

The TFE-based polymer composition of the disclosure can be produced by mixing the TFE-based polymer (A) having an endothermic peak in the region (A) with the TFE-based polymer (B) having an endothermic peak in the region (B). The mixing may be performed by any method. The TFE-based polymers (A) and (B) both in a powder form may be mixed, the TFE-based polymers (A) and (B) both in the form of an aqueous dispersion may be mixed, or the TFE-based polymers (A) and (B), one in the form of an aqueous dispersion and the other in a powder form, may be mixed. To achieve more homogeneous mixing, preferably, the TFE-based polymers (A) and (B) both in the form of an aqueous dispersion are mixed.

For example, the TFE-based polymer composition of the disclosure can suitably be produced by a production method including: (A) mixing an aqueous dispersion of the TFE-based polymer (A) having an endothermic peak in the region (A) with an aqueous dispersion of the TFE-based polymer (B) having an endothermic peak in the region (B); (B) coagulating the resulting aqueous dispersion mixture to obtain a wet powder; and (C) drying the wet powder.

The aqueous dispersion of the TFE-based polymer (B) in the step (A) can be produced, for example, by emulsion polymerization.

The emulsion polymerization can be performed by a known method. For example, emulsion polymerization of monomers (TFE and optionally a modifying monomer) required to constitute each of the TFE-based polymers is performed in an aqueous medium in the presence of a fluorine-containing anionic surfactant and a polymerization initiator, whereby an aqueous dispersion containing particles (primary particles) of the TFE-based polymer can be obtained. In the emulsion polymerization, additives such as a chain transfer agent, a buffer, a pH adjuster, a stabilization aid, a dispersion stabilizer, or a radical scavenger may be used as needed.

The aqueous dispersion may contain at least one fluorine-containing compound described above.

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the surfactant, and the like may be added in accordance with the purposes.

The polymerization initiator may be any initiator capable of generating radicals within the polymerization temperature range, and any known oil-soluble and/or water-soluble polymerization initiator may be used. Further, the initiator may be combined with a reducing agent, for example, into the form of a redox agent to start polymerization. The concentration of the polymerization initiator is appropriately determined depending on the types of the monomers, the molecular weight of the target TFE-based polymer, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di (perfluoroheptanoyl)peroxide, di (perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, t-butyl hydroperoxide, and disuccinic acid peroxide. Preferred among these are ammonium persulfate and disuccinic acid peroxide. The initiator may also contain a reducing agent such as a sulfite or a sulfurous acid salt. The amount thereof used may be 0.1 to 20 times the peroxide.

The water-soluble radical polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

In order to easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of the copper salt is copper(II) sulfate and an example of the iron salt is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continually or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

In use of a redox initiator, the oxidizing agent and the reducing agent may be added at once in an early stage of polymerization, or the reducing agent may be added at once in an early stage of polymerization and the oxidizing agent may be added continuously. Alternatively, the oxidizing agent may be added at once in an early stage of polymerization and the reducing agent may be added continuously, or both the oxidizing agent and the reducing agent may be added continuously.

When one agent of the redox polymerization initiator is added in an early stage of polymerization and the other agent is added continuously, it is preferable to gradually slow down the addition speed in order to obtain a TFE-based polymer with a low SSG. Moreover, addition is preferably stopped in the middle of polymerization. The addition is preferably stopped before 20% to 40% by mass of the total TFE to be consumed in the polymerization reaction is consumed.

In use of a redox initiator as a polymerization initiator, the amount of the oxidizing agent added is preferably 0.1 ppm or more, more preferably 0.3 ppm or more, still more preferably 0.5 ppm or more, further more preferably 1 ppm or more, particularly preferably 5 ppm or more, even more preferably 10 ppm or more, while preferably 10000 ppm or less, more preferably 1000 ppm or less, still more preferably 100 ppm or less, further more preferably 10 ppm or less in the aqueous medium. The amount of the reducing agent added is preferably 0.1 ppm or more, more preferably 1.0 ppm or more, still more preferably 3 ppm or more, further more preferably 5 ppm or more, particularly preferably 10 ppm or more, while preferably 10000 ppm or less, more preferably 1000 ppm or less, still more preferably 100 ppm or less, further more preferably 10 ppm or less.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

In order to easily achieve various properties described above, preferred examples of the polymerization initiator include a water-soluble radical polymerization initiator and a redox initiator.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, a decomposer of a polymerization initiator, or a dicarboxylic acid may be used as needed.

In order to adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt. The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:
(-CFCF₃-CF₂-O-)ₙ,
(-CF₂-CF₂-CF₂-O-)ₙ,
(-CF₂-CF₂-O-)ₙ-(-CF₂-O-)ₘ, and
(-CF₂-CFCF₃-O-)ₙ-(-CF₂-O-)ₘ.

These structures are disclosed by Kasai in J. Appl. Polymer Sci. 57, 797 (1995). As disclosed in this literature, the PFPE acid or its salt may have a carboxylic acid group or its salt at one end or each end. The PFPE acid or its salt may also have a sulfonic acid or phosphonic acid group or its salt at one end or each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Further more preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or each end may be used in the production method of the disclosure. The PFPE acid or its salt preferably has a number average molecular weight of less than 6000 g/mol.

In order to further increase the molecular weight of a TFE-based polymer and improve the strength of the mixture sheet, a radical scavenger or a decomposer of a polymerization initiator is preferably added in the emulsion polymerization. The radical scavenger or the decomposer of a polymerization initiator is added after the start of the polymerization reaction, preferably before 10% by mass, preferably 20% by mass of the total TFE to be consumed in the polymerization reaction is polymerized, while preferably before 50% by mass, preferably 40% by mass of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further more preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes at least one selected from the group consisting of, for example, sulfites, bisulfites, bromates, diimines, diimine salts, oxalic acid, oxalates, copper salts, and iron salts. Examples of the sulfite include sodium sulfite and ammonium sulfite. An example of copper salts is copper(II) sulfate and an example of iron salts is iron(II) sulfate.

In order to moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In order to reduce the amount of coagulum produced during polymerization, the emulsion polymerization may be performed in the presence of a dicarboxylic acid in an amount of 5 to 500 ppm, preferably 10 to 200 ppm in the aqueous medium. If the amount of the dicarboxylic acid is too small relative to the aqueous medium, a sufficient effect may not be achieved. Conversely, if the amount is too large, a chain transfer reaction may occur, and the resulting polymer may have a low molecular weight. The amount of the dicarboxylic acid is more preferably 150 ppm or less. The dicarboxylic acid may be added before the start of the polymerization reaction or may be added during the polymerization.

The dicarboxylic acid is preferably one represented by the formula: HOOCRCOOH (wherein R is a C1-C5 alkylene group), more preferably succinic acid, malonic acid, glutaric acid, adipic acid, or pimelic acid, still more preferably succinic acid.

In the emulsion polymerization, the polymerization temperature and the polymerization pressure are determined as appropriate in accordance with the types of the monomers used, the molecular weight of the target TFE-based polymer, and the reaction rate. Usually, the polymerization temperature is 5°C to 150°C, preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

When VDF is used as a modifying monomer in the emulsion polymerization, in order to easily achieve the above-mentioned physical properties, the VDF concentration in the gas in the reactor at the time of starting polymerization (when adding an initiator) is preferably set to 0.001 mol% or higher, more preferably 0.01 mol% or higher. The VDF concentration may be 15 mol% or lower, preferably 6.0 mol% or lower, still more preferably 5.0 mol% or lower, further more preferably 3.0 mol% or lower, particularly preferably 1.0 mol% or lower. The VDF concentration may be maintained thereafter until the end of the polymerization reaction, or depressurization may be performed during the process. VDF is preferably fed all at once before the start of polymerization. Still, a portion thereof may be added continuously or intermittently after the start of polymerization.

When VDF is used as a modifying monomer in the emulsion polymerization, depressurization is preferably not performed until the polymerization is completed after VDF is introduced into the polymerization container. This allows VDF to remain in the system until the end of polymerization, leading to still higher strength of the mixture sheet containing the TFE-based polymer to be obtained.

When HFP is used as a modifying monomer in the emulsion polymerization, in order to easily achieve the above-mentioned physical properties, the HFP concentration in the gas in the reactor at the time of starting polymerization (when adding an initiator) is preferably set to 0.01 to 3.0 mol%. Further, the HFP concentration in the gas in the reactor at the time when 40% by mass of the total TFE to be consumed in the polymerization reaction is polymerized is preferably higher than 0 mol% and 0.2 mol% or lower. The HFP concentration is preferably maintained thereafter until the end of the polymerization reaction. HFP may be fed all at once before the start of polymerization, or a portion thereof may be fed before the start of polymerization and the rest may be added continuously or intermittently after the start of polymerization. By allowing HFP to remain until the end of the polymerization reaction, the extrusion pressure is reduced even though the mixture sheet containing the TFE-based polymer to be obtained has a high strength.

When HFP is used as a modifying monomer in the emulsion polymerization, in order to achieve further improved strength of the mixture sheet containing the TFE-based polymer to be obtained, preferably, depressurization is performed before 5% to 40% by mass of the total TFE to be consumed in the polymerization reaction is polymerized, followed by repressurization with TFE alone.

The depressurization is preferably performed such that the pressure inside the reactor is 0.2 MPaG or lower, more preferably 0.1 MPaG or lower, still more preferably 0.05 MPaG or lower. The depressurization is preferably performed such that the pressure inside the reactor is 0.0 MPaG or higher.

The depressurization and the repressurization may be performed multiple times. The depressurization may be performed to a reduced pressure using a vacuum pump.

When CTFE is used as a modifying monomer in the emulsion polymerization, in order to easily achieve the above-mentioned physical properties, the CTFE concentration in the gas in the reactor at the time of starting polymerization (when adding the initiator) is preferably set to 0.001 mol% or higher, more preferably 0.01 mol% or higher. The CTFE concentration is also preferably 3.0 mol% or lower, more preferably 1.0 mol% or lower. The CTFE concentration may be maintained thereafter until the end of the polymerization reaction, or depressurization may be performed during the polymerization reaction. CTFE is preferably fed all at once before the start of polymerization. Still, a portion thereof may be added continuously or intermittently after the start of polymerization.

When CTFE is used as a modifying monomer in the emulsion polymerization, depressurization is preferably not performed until the polymerization is completed after the CTFE is introduced into the polymerization container. This allows CTFE to remain in the system until the end of polymerization, leading to still higher strength of the mixture sheet containing the TFE-based polymer to be obtained.

For example, the aqueous dispersion of the TFE-based polymer (A) in the step (A) can suitably be produced by performing, in the emulsion polymerization of TFE and a modifying monomer, (1a) polymerization reaction in which the modifying monomer is fed into the reaction system in the early stage of the polymerization reaction, and after the step (1a), (2a) introducing a chain transfer agent and/or a modifying monomer into the reaction system.

This production method can easily produce an aqueous dispersion of the above-described TFE copolymer having an extrusion pressure of 75 MPa or lower at a RR of 1000. Moreover, the production method can easily produce a TFE copolymer having a core-shell structure.

Examples of the modifying monomer used in the step (1a) include fluoro(alkyl vinyl ethers) such as perfluoro(alkyl vinyl ether) (PAVE); vinyl heterocyclic compounds such as perfluoro-2,2-dimethyl-1,3-dioxole (PDD); and fluoroolefins such as hexafluoropropylene (HFP) and chlorotrifluoroethylene (CTFE). The modifying monomer used can include one or two or more of these.

Of these, the modifying monomer is preferably at least one selected from the group consisting of fluoro(alkyl vinyl ethers) and fluoroolefins, more preferably at least one selected from the group consisting of PAVE, HFP, and CTFE, still more preferably at least one selected from the group consisting of PAVE and CTFE, further preferably CTFE.

Use of PAVE and HFP in combination as the modifying monomer in the step (1a) is also preferred.

PAVE is preferably perfluoro(propyl vinyl ether) (PPVE).

The chain transfer agent in the step (2a) may be any agent that can reduce the molecular weight of the TFE-based polymer constituting the shell of the core-shell structure. Examples thereof include those containing non-peroxidized organic compounds such as water-soluble alcohols, hydrocarbons, and fluorinated hydrocarbons, water-soluble organic peroxides such as disuccinic peroxide (DSP), and persulfates such as ammonium persulfate (APS) and potassium persulfate (KPS).

The chain transfer agent contains at least one of a non-peroxidized organic compound, a water-soluble organic peroxide, or a persulfate.

The chain transfer agent may contain one or two or more of each of the non-peroxidized organic compound, the water-soluble organic peroxide, and the persulfate.

In terms of good dispersibility and uniformity in the reaction system, the chain transfer agent preferably includes at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane, particularly preferably methanol.

The modifying monomer in the step (2a) preferably includes at least one selected from the group consisting of fluoro(alkyl vinyl ethers) and fluoroolefins described above, more preferably at least one selected from the group consisting of PAVE, HFP, and CTFE, still more preferably at least one selected from the group consisting of HFP and CTFE, still more preferably CTFE.

Use of the chain transfer agent and the modifying monomer in combination in the step (2a) is also preferred.

When the modifying monomer used in the step (1a) includes CTFE, the modifying monomer used in the step (2a) preferably includes CTFE.

When the modifying monomer used in the step (1a) includes PAVE (and HFP), the chain transfer agent used in the step (2a) preferably includes methanol (and the modifying monomer used preferably includes HFP).

The polymerization reaction in the step (1a) is preferably performed until the conversion rate of TFE used in the entire emulsion polymerization step including the step (1a) and the step (2a) reaches 80% or higher, preferably 80% to 97%, more preferably 85% to 95%.

The term "conversion rate" herein refers to a proportion of the amount of TFE having been consumed in the polymerization from the start of the polymerization to a specific point during the polymerization, in the amount of TFE corresponding to the target amount of the TFE unit.

In the step (1a) and the step (2a), the reaction conditions can be appropriately set in accordance with the type of the modifier used, the composition and yield of the target TFE-based polymer.

The emulsion polymerization can be performed in an aqueous medium in the presence of a fluorine-containing anionic surfactant and a polymerization initiator. A dispersion stabilizer may be used as needed.

The amount of the fluorine-containing anionic surfactant may be set to 0.02 to 0.3% by mass of the aqueous medium.

The polymerization initiator used may be, for example, a persulfate such as ammonium persulfate (APS) or a water-soluble organic peroxide such as disuccinic peroxide (DSP). One of these polymerization initiators or two or more of these polymerization initiators in combination may be used. In particular, preferred are APS and DSP as they also act as the chain transfer agent described above.

In the emulsion polymerization, the polymerization initiator is preferably used in an amount of 0.0001 to 0.02 parts by mass per 100 parts by mass of the aqueous medium.

Examples of the aqueous medium include those described above.

The emulsion polymerization can be performed at a polymerization temperature of 10°C to 95°C. In the case of using a persulfate or a water-soluble organic peroxide as a polymerization initiator, the polymerization temperature is preferably 60°C to 90°C.

The emulsion polymerization can be performed typically at 0.5 to 3.9 MPaG, preferably at 0.6 to 3 MPaG.

The emulsion polymerization can be performed at a pressure of 0.5 MPaG or lower at an initial stage of polymerization, specifically, while the conversion rate of TFE is within a range of 15% or lower of the whole, and at a pressure higher than 0.5 MPaG thereafter. Alternatively, the emulsion polymerization can be performed such that the reaction pressure is lowered to, for example, 0.1 MPaG or lower during formation of the core and TFE is again fed to allow the reaction to progress at a predetermined pressure.

The mixing in the step (A) can be performed by a known method.

The coagulation in the step (B) can be performed by a known method.

In the step (C), the drying is typically performed by means such as vacuum, high frequency, or hot air, while the wet powder is kept in a state where it does not flow so much, preferably in a stationary state. Friction between powders, especially at high temperatures generally has an unfavorable effect on a fine powder TFE-based polymer. This is because particles made of a TFE-based polymer of this type are easily fibrillated even by a small shearing force to lose their original stable particle structure.

The step (C) preferably includes placing the wet powder obtained in the step (B) in a container with air permeability on the bottom and/or sides and heating the powder at a temperature of 130°C to 300°C for two hours or longer. Such a heat treatment under extremely limited conditions as described above can efficiently remove the fluorine-containing compound having a molecular weight of 1000 or less together with water, setting the amounts of the fluorine-containing compound and water within the above ranges.

In order to more efficiently remove water and the fluorine-containing compound, the temperature of the heat treatment in the step (C) is preferably 140°C or higher, more preferably 150°C or higher, still more preferably 160°C or higher, further more preferably 180°C or higher, still more preferably 200°C or higher, particularly preferably 220°C or higher, while preferably 280°C or lower, more preferably 250°C or lower.

In order to more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. In order to reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water and the fluorine-containing compound, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the heat treatment in the step (C), in order to more efficiently remove water and the fluorine-containing compound, the wet powder is placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 um or less (mesh No. 10 or higher (ASTM)), more preferably 595 um or less (mesh No. 30 or higher), still more preferably 297 um or less (mesh No. 50 or higher), further more preferably 177 um or less (mesh No. 80 or higher), even more preferably 149 µm or less (mesh No. 100 or higher), particularly preferably 74 µm or less (mesh No. 200 or higher). The opening is preferably 25 µm or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is preferably 95% or lower.

In order to more efficiently remove water and the fluorine-containing compound, the amount of the wet powder placed in the step (C) is preferably 10 g/cm² or less, more preferably 8 g/cm² or less, still more preferably 5 g/cm² or less, particularly preferably 3 g/cm² or less, while preferably 0.01 g/cm² or more, more preferably 0.05 g/cm² or more, still more preferably 0.1 g/cm² or more.

In order to more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower relative to the wet powder.

When the TFE-based polymers (A) and (B) both in a powder form are mixed, the composition can be produced, for example, by a production method including a step of preparing the TFE-based polymers (A) and (B) in a powder form and a step of mixing the TFE-based polymers (A) and (B) in a powder form.

The TFE-based polymers (A) and (B) in a powder form can each be produced, for example, by a process including coagulating an aqueous dispersion of the TFE-based polymer (A) or an aqueous dispersion of the TFE-based polymer (B) to obtain a wet powder and drying the wet powder.

The aqueous dispersion of the TFE-based polymer (A) and the aqueous dispersion of the TFE-based polymer (B) can be produced, for example, by the method described for the above-described step (A).

The coagulating each aqueous dispersion and the drying the wet powder can be performed in the same manner as in the steps (B) and (C).

In order to prevent or reduce fibrillation of the TFE-based polymer composition, to improve powder flowability, and to improve the strength of the mixture sheet, the step of mixing the TFE-based polymers (A) and (B) in a powder form is preferably performed by a mixing method with low shear force. Examples of the mixing method with low shear force include mixing methods using no stirring blade, such as airflow mixing and mixing using a V-blender.

A common mixing method using a stirring blade may cause fibrillation of the TFE-based polymers and thus may not achieve the desired physical properties.

The TFE-based polymer composition of the disclosure can be obtained by mixing the TFE-based polymers (A) and (B) with a component such as a conductive aid, as needed. The TFE-based polymer composition of the disclosure can be used in an electrochemical device binder and is mixed with an electrode active material and a solid electrolyte. The mixing of the prepared TFE-based polymer composition of the disclosure with an electrode active material and a solid electrolyte achieves good dispersion of the TFE-based polymers (A) and (B) in the TFE-based polymer composition and remarkable exertion of the function as a binder.

In the electrochemical device binder, the TFE-based polymer composition of the disclosure may be used alone or mixed with other materials (for example, polymers other than the TFE-based polymers). Still, the TFE-based polymer composition of the disclosure is preferably substantially used alone, more preferably used alone. The phrase "the TFE-based polymer composition of the disclosure is substantially used alone" means that the TFE-based polymer composition is used such that the amount of the TFE-based polymer composition in the electrochemical device binder falls within the range described below.

The disclosure also provides an electrochemical device binder consisting essentially of a TFE-based polymer composition, the TFE-based polymer composition having endothermic peaks in a region (A) of 330°C or higher and lower than 340°C and a region (B) of 340°C or higher and 350°C or lower in differential scanning calorimetry.

The binder of the disclosure containing a specific TFE-based polymer composition is less likely to form aggregates with powder components in electrochemical devices, such as electrode active materials and solid electrolytes, even if they are kneaded for a long time. It is homogenously mixable with the powder components. The binder can provide a mixture sheet with high strength and high flexibility.

The binder of the disclosure does not require a large amount of a dispersion medium such as water or an organic solvent and can be combined with a wide range of electrode active materials and solid electrolytes, which is advantageous in terms of the production process. The process and cost derived from use of a dispersion medium can be reduced.

Moreover, the binder of the disclosure has excellent binding force to active materials and electrolytes, which can reduce the amount of the binder used.

The TFE-based polymer composition in the binder of the disclosure may be the same as the TFE-based polymer composition of the disclosure described above, and preferred embodiments are also the same.

The binder of the disclosure consists essentially of the TFE-based polymer composition. This allows remarkable exertion of the effect attributable to the TFE-based polymer composition. The phrase "consists essentially of the TFE-based polymer composition" means that the amount of the TFE-based polymer composition is 95.0% by mass or more relative to the binder.

The amount of the TFE-based polymer composition is preferably 98.0% by mass or more, more preferably 99.0% by mass or more, still more preferably 99.5% by mass or more, particularly preferably 99.9% by mass or more, most preferably 99.95% by mass or more relative to the binder.

The binder of the disclosure also preferably consists of the TFE-based polymer composition.

Preferably, the binder of the disclosure is substantially free from organic solvents. This can reduce the process and cost derived from use of organic solvents. The expression "substantially free from organic solvents" means that the organic solvent content of the binder is 5% by mass or less.

The organic solvent content is preferably 3% by mass or less, more preferably 1% by mass or less, still more preferably 0.1% by mass or less, further more preferably 0.01% by mass or less, particularly preferably 0.001% by mass or less.

The binder of the disclosure is preferably in a powdery form.

The binder of the disclosure is used in electrochemical devices such as batteries and capacitors.

Examples of batteries include secondary batteries such as lithium ion batteries.

The binder may be used in any capacitor. An electrochemical capacitor is preferred. Examples of electrochemical capacitors include electric double layer capacitors, hybrid capacitors, and redox capacitors. Examples of hybrid capacitors include sodium ion capacitors, lithium ion capacitors, and magnesium ion capacitors. Among these, electric double layer capacitors are particularly preferred.

The binder of the disclosure can be suitably used as a battery binder or a capacitor binder, and can be more suitably used as a binder for secondary batteries such as lithium-ion batteries.

The binder of the disclosure may be used for producing electrochemical device members, preferably battery members.

The binder of the disclosure can be particularly suitably used as an electrode binder.

The binder of the disclosure can be also suitably used as a binder in a solid electrolyte layer of a solid-state secondary battery.

The disclosure also provides an electrode mixture containing an electrode active material and the TFE-based polymer composition of the disclosure or the binder of the disclosure. Use of the electrode mixture of the disclosure can provide mixture sheets in which powder components in electrochemical devices are homogeneously dispersed and which have high strength and high flexibility. Even a small amount of the binder can hold electrode active materials. Thus, the electrode can contain a larger amount of materials which improve the electrochemical device properties, such as active materials and conductive aids.

Examples of the electrode active material include a positive electrode active material and a negative electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides which produce high voltage. Examples of the alkali metal ions include lithium ions, sodium ions, and potassium ions. In a preferred embodiment, the alkali metal ions may be lithium ions. That is, in this embodiment, the alkali metal ion secondary battery is a lithium-ion secondary battery.

Examples of the alkali metal-containing transition metal composite oxides include alkali metal-manganese spinel composite oxides (e.g., lithium-manganese spinel composite oxides) represented by the formula:

MₐMn_{2-b}M¹_{b}O₄

wherein M includes at least one metal selected from the group consisting of Li, Na, and K; 0.9 ≤ a; 0 ≤ b ≤ 1.5; and M¹ includes at least one metal selected from the group consisting of Fe, Co, Ni, Cu, Zn, Al, Sn, Cr, V, Ti, Mg, Ca, Sr, B, Ga, In, Si, and Ge;
alkali metal-nickel composite oxides (e.g., lithium-nickel composite oxides) represented by the formula:

   MNi_{1-c}M²_{c}O₂

   wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
alkali metal-cobalt composite oxides (e.g., lithium-cobalt composite oxides) represented by the formula:

   MCo_{1-d}M³_{d}O₂

   wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge.

In the above formulas, M is preferably a metal selected from the group consisting of Li, Na, and K, more preferably Li or Na, still more preferably Li.

In order to achieve high-energy-density, high-output secondary batteries, preferred among these are MCoO₂, MMnO₂, MNiO₂, MMn₂O₄, MNi_{0.8}Co_{0.15}Al_{0.05}O₂, and MNi_{1/3}Co_{1/3}Mn_{1/3}O₂, and preferred is a compound represented by the following formula (3):

MNiₕCoᵢMnⱼM⁵ₖO₂ (3)

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula (4):

MₑM⁴_{f}(PO₄)_{g} (4)

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formula, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula (5):

Li_{y}Ni₁₋ₓMₓO₂ (5)

wherein 0.01 ≤ x ≤ 0.7, 0.9 ≤ y ≤ 2.0, and M is a metal atom (other than Li and Ni).

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. An electrochemical device such as a secondary battery containing a positive electrode material including the positive electrode active material exemplified above is preferred for the following reasons. Namely, it is less likely to have a decrease in remaining capacity or a change in resistance increase rate even after storage at high temperature and the battery performance does not deteriorate even when the device is operated at high voltage.

Other examples of the positive electrode active material include a solid solution material of M₂MnO₃ and MM⁶O₂ (wherein M includes at least one metal selected from the group consisting of Li, Na, and K; and M⁶ is a transition metal such as Co, Ni, Mn, or Fe).

The solid solution material is, for example, an alkali metal manganese oxide represented by the formula Mx[Mn_{(1-y)}M⁷_{y}]O_{z}. In the formula, M includes at least one metal selected from the group consisting of Li, Na, and K; and M⁷ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material in which LiNiO₂ or LiCoO₂ is dissolved in a Li₂MnO₃ base such as Li_{1.2}Mn_{0.5}Co_{0.14}Ni_{0.14}O₂ is preferred because it can provide an alkali metal ion secondary battery with high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the materials. In the case of attaching carbon, for example, a carbonaceous material in the form of activated carbon may be mechanically attached to the surface afterward.

For the amount of the substance attached to the surface in terms of the mass relative to the amount of the positive electrode active material, the lower limit thereof is preferably 0.1 ppm or more, more preferably 1 ppm or more, still more preferably 10 ppm or more, while the upper limit thereof is preferably 20% or less, more preferably 10% or less, still more preferably 5% or less. The substance attached to the surface can reduce oxidation of the electrolyte on the surface of the positive electrode active material, improving the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably 0.5 g/cm³ or higher, more preferably 0.8 g/cm³ or higher, still more preferably 1.0 g/cm³ or higher. The positive electrode active material having a tap density below the lower limit may cause an increased amount of a dispersion medium required and increased amounts of a conductive material and a binder required in formation of the positive electrode active material layer, as well as limitation on the packing fraction of the positive electrode active material in the positive electrode active material layer, resulting in limitation on the battery capacity. The use of a complex oxide powder having a high tap density enables formation of a positive electrode active material layer with a high density. A higher tap density is normally preferred, and there is no upper limit. Still, too high a tap density may be a rate-determining factor of diffusion of lithium ions in the positive electrode active material layer with the electrolyte serving as a diffusion medium, easily impairing the load characteristics. Thus, the upper limit of the tap density is preferably 4.0 g/cm³ or lower, more preferably 3.7 g/cm³ or lower, still more preferably 3.5 g/cm³ or lower.

The tap density is determined as a powder packing density (tap density) g/cm³ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 um or greater, more preferably 0.5 um or greater, still more preferably 0.8 um or greater, most preferably 1.0 um or greater, while preferably 30 um or smaller, more preferably 27 um or smaller, still more preferably 25 um or smaller, most preferably 22 um or smaller. The particles having a median size below the lower limit may fail to provide a product with a high tap density. The particles having a median size greater than the upper limit may cause prolonged diffusion of lithium in the particles, possibly impairing the battery performance. Mixing two or more positive electrode active materials having different median sizes d50 can further improve the easiness of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass sodium hexametaphosphate aqueous solution and the measurement refractive index is set to 1.24 after 5-minute ultrasonic dispersion.

When the primary particles agglomerate to form secondary particles, the average primary particle size of the positive electrode active material is preferably 0.05 um or greater, more preferably 0.1 um or greater, still more preferably 0.2 µm or greater. The upper limit thereof is preferably 5 um or smaller, more preferably 4 um or smaller, still more preferably 3 um or smaller, most preferably 2 um or smaller. The primary particles having an average primary particle size greater than the upper limit may have difficulty in forming spherical secondary particles, adversely affecting the powder packing. Further, such primary particles may have a greatly reduced specific surface area, highly possibly impairing the battery performance such as output characteristics. In contrast, the primary particles having an average primary particle size below the lower limit may usually be insufficiently grown crystals, causing poor charge and discharge reversibility, for example.

The primary particle size is measured by scanning electron microscopic (SEM) observation. Specifically, the primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the primary particle size.

The positive electrode active material has a BET specific surface area of preferably 0.1 m²/g or larger, more preferably 0.2 m²/g or larger, still more preferably 0.3 m²/g or larger. The upper limit thereof is preferably 50 m²/g or smaller, more preferably 40 m²/g or smaller, still more preferably 30 m²/g or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

When the secondary battery of the disclosure is used as a large-size lithium-ion secondary battery for hybrid vehicles or distributed generation, it needs to achieve high output. Thus, the particles of the positive electrode active material are preferably mainly composed of secondary particles. The particles of the positive electrode active material preferably include 0.5 to 7.0% by volume of fine particles having an average secondary particle size of 40 um or smaller and having an average primary particle size of 1 um or smaller. The presence of fine particles having an average primary particle size of 1 um or smaller enlarges the contact area with the electrolyte and enables more rapid diffusion of lithium ions between the electrode mixture and the electrolyte, improving the output performance of the battery.

The positive electrode active material may be produced by any usual method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, Li₂CO₃, or LiNO₃ is added thereto and the mixture is sintered at high temperature, thereby providing an active material.

In production of the positive electrode, one of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or LiMn₂O₄ in which one or more Mn atoms are replaced by a different transition metal, and a combination of LiFePO₄ with either LiCoO₂ or LiCoO₂ in which one or more Co atoms are replaced by a different transition metal.

In order to achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may cause an insufficient electric capacity. In contrast, too large an amount thereof may cause insufficient strength of the positive electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Among these, a material containing a carbonaceous material at least in a part or a silicon-containing compound can be particularly suitably used.

The negative electrode active material used in the disclosure preferably contains silicon as a constituent element. Use of a negative electrode active material containing silicon as a constituent element enables production of a high-capacity battery.

Preferred materials containing silicon include silicon particles, particles having a structure in which fine silicon particles are dispersed in a silicon-based compound, silicon oxide particles represented by the formula SiOx (0.5 ≤ x ≤ 1.6), and mixtures of these. Use of any of these provides a negative electrode mixture for lithium-ion secondary batteries with higher initial charge/discharge efficiency, high capacity, and excellent cycle characteristics.

The term "silicon oxide" herein is a generic term for amorphous silicon oxides. Silicon oxides prior to disproportionation are represented by the formula: SiOx (0.5 ≤ x ≤ 1.6) where x preferably satisfies 0.8 ≤ x ≤ 1.6, more preferably 0.8 ≤ x ≤ 1.3. This silicon oxide can be obtained, for example, by cooling and precipitating silicon monoxide gas produced by heating a mixture of silicon dioxide and metal silicon.

Particles having a structure in which fine silicon particles are dispersed in a silicon-based compound can be obtained by, for example, a method including sintering a mixture of fine silicon particles with a silicon-based compound, or by heating silicon oxide particles before disproportionation represented by the formula SiOx at a temperature of 400°C or higher, suitably at 800°C to 1100°C in an inert, non-oxidizing atmosphere such as an argon atmosphere to perform a disproportionation reaction. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in amorphous silicon oxide can be confirmed using a transmission electron microscope.

The physical properties of the silicon-containing particles can be appropriately determined in accordance with the target composite particles. For example, the average particle size is preferably 0.1 to 50 um. The lower limit is more preferably 0.2 um or greater, still more preferably 0.5 µm or greater. The upper limit is more preferably 30 um or smaller, still more preferably 20 um or smaller. The average particle size is expressed as a weight average particle size determined by particle size distribution measurement by a laser diffraction method.

The BET specific surface area is preferably 0.5 to 100 m²/g, more preferably 1 to 20 m²/g. With the BET specific surface area of 0.5 m²/g or larger, there is no risk that the adhesiveness of the negative electrode active material when processed into the electrode decreases and the electrochemical device characteristics are impaired. A BET specific surface area of 100 m²/g or less can increase the proportion of silicon dioxide on the particle surface, which eliminates the risk of battery capacity reduction upon use of the silicon fine particles as a negative electrode material for a lithium-ion secondary battery.

Coating the silicon-containing particles with carbon imparts conductivity, thereby improving electrochemical device characteristics. Examples of the method for imparting conductivity include a method including mixing the silicon-containing particles with conductive particles such as graphite particles, a method including coating the silicon-containing particle surface with a carbon film, and a method combining these two methods. Preferred is a method including coating with a carbon film, and more preferred is a method including chemical vapor deposition (CVD).

In order to increase the capacity of the resulting electrode mixture, the amount of the negative electrode active material in the electrode mixture is preferably 40% by mass or more, more preferably 50% by mass or more, particularly preferably 60% by mass or more. The upper limit is preferably 99% by mass or less, more preferably 98% by mass or less.

The electrode mixture of the disclosure preferably further contains a conductive aid. The conductive aid may be contained in the TFE-based polymer composition of the disclosure or may be added separately from the TFE-based polymer composition of the disclosure.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount less than the above range may cause insufficient conductivity. In contrast, the conductive aid in an amount more than the above range may cause a low battery capacity.

The electrode mixture of the disclosure may further contain a thermoplastic resin. Examples of thermoplastic resins include polyvinylidene fluoride, polypropylene, polyethylene, polystyrene, polyethylene terephthalate, and polyethylene oxide. One thermoplastic resin may be used alone, or two or more thermoplastic resins may be used in any combination at any ratio.

The proportion of the thermoplastic resin relative to the electrode active material is usually 0.01% by mass or more, preferably 0.05% by mass or more, more preferably 0.10% by mass or more, while usually 3.0% by mass or less, preferably 2.5% by mass or less, more preferably 2.0% by mass or less. Addition of a thermoplastic resin can improve the mechanical strength of the electrode. The thermoplastic resin at a proportion higher than the above range may lower the proportion of the electrode active material in the electrode mixture, resulting in a low capacity of the electrochemical device and high resistance between the active materials.

The amount of the binder in the electrode mixture of the disclosure may be 0.1% by mass or more, preferably 0.2% by mass or more, more preferably 0.5% by mass or more relative to the electrode mixture. The amount may be 50% by mass or less, preferably 40% by mass or less, more preferably 30% by mass or less, further more preferably 10% by mass or less, particularly preferably 5% by mass or less, most preferably 3% by mass or less relative to the electrode mixture. Too low a proportion of the binder may fail to sufficiently hold the electrode mixture active material and cause insufficient mechanical strength of the electrode mixture sheet, impairing the battery performance such as cycle characteristics. Too high a proportion of the binder may lead to a decrease in battery capacity and conductivity. Since the binder of the disclosure has excellent binding force, the electrode active material can be sufficiently held even when the binder content is small.

In the electrode mixture of the disclosure, the binder component preferably consists essentially of the TFE-based polymer composition, more preferably consists of the TFE-based polymer composition. The phrase "the binder component consists essentially of the TFE-based polymer composition" means that the amount of the TFE-based polymer composition in the binder component constituting the electrode mixture is 95.0% by mass or more relative to the binder component. The amount of the TFE-based polymer composition is preferably 98.0% by mass or more, more preferably 99.0% by mass or more, still more preferably 99.5% by mass or more, particularly preferably 99.9% by mass or more, most preferably 99.95% by mass or more relative to the binder component.

The electrode mixture of the disclosure is preferably in the form of sheet.

The electrode mixture of the disclosure can suitably be used as an electrode mixture for a secondary battery. In particular, the electrode mixture of the disclosure is suitable for a lithium-ion secondary battery. The electrode mixture of the disclosure, when used for a secondary battery, is commonly used in the form of sheet.

The electrode mixture sheet preferably has a thickness of 300 um or smaller, more preferably 250 um or smaller, still more preferably 200 um or smaller, further more preferably 180 um or smaller, particularly preferably 150 um or smaller, while preferably 10 um or greater, more preferably 15 um or greater, still more preferably 20 um or greater.

An exemplary specific method of producing an electrode mixture sheet containing an electrode mixture is described below. The electrode mixture sheet can be obtained by a production method including: (1) mixing a raw material composition containing an electrode active material, a binder, and, if necessary, a conductive aid; (2) molding the raw material composition obtained in the step (1) into a bulky shape; and (3) rolling the bulky raw material composition obtained in the step (2) into a sheet.

The raw material composition mixed in the step (1) is in a state where materials such as the electrode active material and the binder, etc. are simply mixed and does not have a fixed shape. Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, or a planetary mixer.

For the binder mixing conditions in the step (1), the number of rotations is preferably 3000 rpm or less. The number of rotations is preferably 10 rpm or more, more preferably 15 rpm or more, still more preferably 20 rpm or more, while preferably 2000 rpm or less, more preferably 1500 rpm or less, still more preferably 1000 rpm or less. At the number of rotations below this range, mixing may take a long time, affecting the productivity. At the number of rotations above this range, fibrillation may occur excessively, resulting in an electrode mixture sheet having poor strength and poor flexibility.

Forming into a bulky raw material composition in the step (2) means forming the raw material composition into a single mass. Specific examples of methods of forming into a bulky shape include extrusion molding and press molding. The term "bulky" does not specify the shape and means any state of single mass, including a rod shape, a sheet shape, a spherical shape, a cubic shape, and the like.

A specific example of the rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. As described, better flexibility is achieved not by thinning the rolled sheet in one time but by rolling the sheet in steps. The number of performing the step (4) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

In order to control the fibrillation size, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), or may be repeated. In any of the steps (2), (3), (4), and (5), uniaxial stretching or biaxial stretching may be performed. The fibrillation size can also be adjusted in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The electrode mixture sheet can be suitably produced also by a production method including:
(a) mixing a powdery component and a binder to provide an electrode mixture; and
(b) calendaring or extrusion-molding the electrode mixture into a sheet,
the mixing in the step (a) including: (a1) homogenizing the powdery component and the binder into powder; and (a2) mixing the material powder obtained in the step (a1) to provide the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Accordingly, the homogenizing in the step (a1) is preferably performed at 19°C or lower, preferably at a temperature of 0°C to 19°C.

In other words, such a step (a1) is preferably performed such that the materials are mixed and thereby homogenized while reducing fibrillation.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 80°C.

In an embodiment, the calendering or extrusion molding in the step (b) is performed at a temperature of 30°C to 150°C, preferably 35°C to 120°C, more preferably 40°C to 100°C.

The mixing in the step (a) is preferably performed with shearing force applied.

Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, a planetary mixer, a Henschel mixer, or a rapid mixer.

For the mixing conditions, the number of rotations and the mixing duration are set as appropriate. For example, the number of rotations is suitably 15000 rpm or less. The number of rotations is preferably 10 rpm or more, more preferably 50 rpm or more, still more preferably 100 rpm or more, while preferably 12000 rpm or less, more preferably 10000 rpm or less, still more preferably 8000 rpm or less. At the number of rotations below this range, mixing may take a long time, affecting the productivity. At the number of rotations above this range, fibrillation may occur excessively, resulting in an electrode mixture sheet having poor strength.

The step (a1) is preferably performed at a weaker shearing force than that in the step (a2).

The step (a1) is preferably performed for a shorter time than that in the step (a2).

In the step (a2), the raw material composition preferably contains no liquid solvent, but a small amount of lubricant may be used. In other words, the powdery raw material mixture obtained in the step (a1) may be combined with a lubricant, whereby paste may be prepared.

Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).

The lubricant has a water content of preferably 1000 ppm or less.

A water content of 1000 ppm or less is preferred to reduce deterioration of the electrochemical device. The water content is more preferably 500 ppm or less.

The lubricant, when used, is particularly preferably a low polar solvent such as butyl butyrate or an ether compound.

The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).

The raw material composition preferably contains substantially no liquid solvent. In a conventional method for producing an electrode mixture, typically, a solvent containing a binder dissolved therein is used to prepare slurry containing an electrode mixture component in the form of powder dispersed therein, and the slurry is applied and dried to produce an electrode mixture sheet. In this case, a solvent to disperse or dissolve a binder is used. Still, solvents that can dissolve a binder resin commonly used in conventional cases are limited to specific solvents such as N-methyl pyrrolidone. Since such a solvent is highly polar and the use thereof requires a drying step, the use of the solvent leads to additional steps and cost. These solvents react with an electrolyte such as an electrolyte solution and a solid electrolyte to deteriorate the electrolyte and may cause poor battery performance due to residual components in preparation of slurry or after drying. In addition, low polar solvents such as heptane can dissolve very limited types of binder resin and have a low flash point, which may cause a difficulty in handling.

Not using a solvent but using a powdery binder containing less water in forming an electrode mixture sheet can provide a battery in which the electrolyte is less likely to be deteriorated. The above production method can provide an electrode mixture sheet containing a binder having a fine fibrous structure and can reduce a burden on the production process owing to elimination of slurry production.

The step (b) includes calendering or extrusion. The calendering and extrusion can be performed by known methods. Thereby, the material can be formed into the shape of an electrode mixture sheet.

The step (b) preferably includes (b1) forming the electrode mixture obtained in the step (a) into a bulky electrode mixture and (b2) calendering or extrusion-molding the bulky electrode mixture.

Forming into a bulky electrode mixture means forming the electrode mixture into a single mass.

Specific examples of methods of forming into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 um or greater. The size is more preferably 20000 um or greater.

A specific example of the calendering or extrusion molding in the step (b2) is a method of rolling the electrode mixture using a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) may be preferably followed by a step (c) of applying a larger load on the resulting rolled sheet to form a thinner sheet-shaped product. Repeating the step (c) is also preferred. As described, better flexibility is achieved not by thinning the rolled sheet in one time but by rolling the sheet in steps.

The number of performing the step (c) is preferably twice or more and 10 times or less, more preferably three times or more and nine times or less.

A specific example of a rolling method is a method of rotating two or a plurality of rollers and passing the rolled sheet therebetween to provide a thinner sheet-shaped product.

In order to control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The term "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), or may be repeated.

In any of the steps (a), (b), (c), and (d), uniaxial stretching or biaxial stretching may be performed.

The sheet strength can also be adjusted in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The electrode mixture sheet may be used as an electrode mixture sheet for a secondary battery. The electrode mixture sheet may be for either a negative electrode or a positive electrode. In particular, the electrode mixture sheet is suitable for a lithium-ion secondary battery.

The disclosure also provides an electrode including an electrode active material, a current collector, and the TFE-based polymer composition of the disclosure or the binder of the disclosure. In the electrode of the disclosure, powder components in electrochemical devices are uniformly dispersed. Thus, the electrode has high strength and high flexibility. Even a small amount of the binder can hold electrode active materials. Thus, the electrode can contain a larger amount of materials which improve the electrochemical device properties, such as active materials and conductive aids.

The electrode of the disclosure may contain the aforementioned electrode mixture of the disclosure (preferably the electrode mixture sheet) and a current collector.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 um or greater, preferably 3 um or greater, more preferably 5 um or greater, while usually 1 mm or smaller, preferably 100 um or smaller, more preferably 50 um or smaller. The metal foil having a thickness smaller than this range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The density of the positive electrode mixture sheet is preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. Cracks may tend to occur in the positive electrode mixture sheet having a density higher than the above range. The positive electrode mixture sheet having a density lower than the above range may cause poor conductivity between the active materials and thus increase the battery resistance, failing to provide high output.

The positive electrode may have any thickness. In order to achieve a high capacity and high output, the lower limit of the thickness of the mixture layer on one side of the current collector excluding the thickness of the metal foil of the current collector is preferably 10 um or greater, more preferably 20 um or greater, while preferably 500 um or smaller, more preferably 450 um or smaller.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 um or greater, preferably 3 um or greater, more preferably 5 um or greater, while usually 1 mm or smaller, preferably 100 um or smaller, more preferably 50 um or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. Cracks may tend to occur in the negative electrode mixture sheet having a density higher than the above range. The negative electrode mixture sheet having a density lower than the above range may cause poor conductivity between the active materials and thus increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The disclosure also provides a secondary battery including the aforementioned electrode of the disclosure.

The secondary battery of the disclosure may be a secondary battery obtainable by use of an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The nonaqueous electrolyte solution used may be a solution obtained by dissolving a known electrolyte salt in a known organic solvent for dissolving an electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include LiClO₄, LiAsF₆, LiBF₄, LiPF₆, LiN(SO₂CF₃)₂, and LiN(SO₂C₂F₅)₂. In order to achieve favorable cycle characteristics, particularly preferred is LiPF₆, LiBF₄, LiN(SO₂CF₃)₂, LiN(SO₂C₂F₅)₂, and a combination of any of these.

The concentration of the electrolyte salt is preferably 0.8 mol/L or higher, more preferably 1.0 mol/L or higher. The upper limit is usually 1.5 mol/L, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric which is formed from a material stable to the electrolyte solution, such as resin, glass fiber, or inorganic matter, and which has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or a nonwoven fabric formed from a polyolefin such as polyethylene or polypropylene.

The separator may have any thickness, and the thickness is usually 1 um or greater, preferably 5 um or greater, more preferably 8 µm or greater, while usually 50 µm or smaller, preferably 40 µm or smaller, more preferably 30 µm or smaller. The separator thinner than the above range may have poor insulation and mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 µm and a thickness of 5 to 50 µm. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of smaller than 1 um may be applied to the respective surfaces of the positive electrode with fluororesin used as a binder to form a porous layer.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. In order to reduce the weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin which is different from the resin of the laminate film may be disposed between the resin layers. Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The lithium-ion secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the binder of the disclosure may be used for an electrode layer or a solid electrolyte layer.

According to a preferred embodiment of the disclosure, the disclosure relates to a solid-state secondary battery mixture (preferably a mixture sheet) containing the binder of the disclosure and a solid electrolyte and a solid electrolyte layer (preferably a solid electrolyte layer sheet) containing the binder of the disclosure and a solid electrolyte.

The solid electrolyte used in a solid-state secondary battery mixture may be a sulfide-based solid electrolyte or an oxide-based solid electrolyte. In particular, when a sulfide-based solid electrolyte is used, the solid-state secondary battery mixture is advantageously flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (X = 0.6 to 0.8), Li_{4+y}Ge_{1-y}Ga_{y}S₄ (y = 2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (O), has conductivity of metal ions belonging to Group 1 or Group 2 of the periodic table, and has electronic insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one element selected from Al, Mg, Ca, Sr, V, Nb, Ta, Ti, Ge, In, and Sn; xb satisfies 5 ≤ xb ≤ 10; yb satisfies 1 ≤ yb ≤ 4; zb satisfies 1 ≤ zb ≤ 4; mb satisfies 0 ≤ mb ≤ 2; and nb satisfies 5 ≤ nb ≤ 20), Li_{xc}B_{yc}M^{cc}_{zc}O_{nc} (wherein M^{cc} includes at least one element selected from C, S, Al, Si, Ga, Ge, In, and Sn; xc satisfies 0 ≤ xc ≤ 5; yc satisfies 0 ≤ yc ≤ 1; zc satisfies 0 ≤ zc ≤ 1; and nc satisfies 0 ≤ nc ≤ 6), Li_{xd}(Al,Ga)_{yd}(Ti,Ge)_{zd}Si_{ad}P_{md}O_{nd} (1 ≤ xd ≤ 3, 0 ≤ yd ≤ 2, 0 ≤ zd ≤ 2, 0 ≤ ad ≤ 2, 1 ≤ md ≤ 7, and 3 ≤ nd ≤ 15), Li₍₃₋₂ₓₑ₎M^{ee}ₓₑD^{ee}O (wherein xe is a number of 0 or greater and 0.1 or smaller, M^{ee} is a divalent metal atom, D^{ee} is a halogen atom or a combination of two or more halogen atoms), Li_{xf}Si_{yf}O_{zf} (1 ≤ xf ≤ 5, 0 <yf ≤ 3, and 1 ≤ zf ≤ 10), Li_{xg}S_{yg}O_{zg} (1 ≤ xg ≤ 3, 0 < yg ≤ 2, and 1 ≤ zg ≤ 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w < 1), Li_{3.5}Zn_{0.25}GeO₄ having a lithium super ionic conductor (LISICON) crystal structure, La_{0.51}Li_{0.34}TiO_{2.94} having a perovskite crystal structure, La_{0.55}Li_{0.35}TiO₃, LiTi₂P₃O₁₂ having a natrium super ionic conductor (NASICON) crystal structure, Li_{1+xh+yh}(Al,Ga)ₓₕ(Ti,Ge)₂₋ₓₕSi_{yh}P_{3-yh}O₁₂ (0 ≤ xh ≤ 1 and 0 ≤ yh ≤ 1), and Li₇La₃Zr₂O₁₂ (LLZ) having a garnet crystal structure. Ceramic materials in which element substitution is performed for LLZ are also known. Examples thereof include Li_{6.24}La₃Zr₂Al_{0.24}O_{11.98} and Li_{6.25}Al_{0.25}La₃Zr₂O₁₂ in which partial element substitution using Al is performed for LLZ, Li_{6.6}La₃Zr_{1.6}Ta_{0.4}O₁₂ in which partial element substitution using Ta is performed for LLZ, and Li_{6.75}La₃Zr_{1.75}Nb_{0.25}O₁₂ in which partial element substitution using Nb is performed for LLZ. Other examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and O are also desirable. Examples include lithium phosphate (Li₃PO₄), LiPON in which one or more oxygen atoms in lithium phosphate are replaced with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA¹ON (wherein A¹ includes at least one selected from Si, B, Ge, Al, C, Ga, and the like) can also be preferably used. Specific examples include Li₂O-Al₂O₃-SiO₂-P₂O₅-TiO₂-GeO₂ and Li₂O-Al₂O₃-SiO₂-P₂O₅-TiO₂.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type (La_{0.51}Li_{0.34}TiO_{2.94} etc.), NASICON type (Li_{1.3}Al_{0.3}Ti_{1.7}(PO₄)₃ etc.), or garnet type (Li₇La₃Zr₂O₁₂ (LLZ) etc.). Preferred among these is the NASICON type.

The volume average particle size of the oxide solid electrolyte is not limited. Still, the volume average particle size is preferably 0.01 um or greater, more preferably 0.03 um or greater. The upper limit is preferably 100 um or smaller, more preferably 50 um or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data was acquired from this dispersion sample 50 times using a quartz cell for measurement at a temperature of 25°C with a laser diffraction/scattering particle size distribution analyzer LA-920 (HORIBA), and the volume average particle size was determined. For other detailed conditions and the like, JIS Z8828:2013 "Particle size analysis - Dynamic light scattering" is referred as necessary. Five samples are prepared for each level and the average value is used.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

The embodiments have been described above, and it will be understood that various changes in form or detail can be made without departing from the gist and scope of the claims.

### EXAMPLES

The disclosure is more specifically described hereinbelow with reference to examples, but the disclosure is not limited to these examples.

Various physical properties were measured by the following methods.

### <Average primary particle size>

The aqueous TFE-based polymer dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

### <Polymer solid concentration>

An aqueous TFE-based polymer dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Amount of modifying monomer>

The TFE-based polymer powder or composition was press-molded into a thin-film disc and the thin-film disc was subjected to FT-IR measurement, so that infrared absorbances were obtained. The CTFE content was determined by multiplying the ratio (absorbance at 957 cm⁻¹)/(absorbance at 2360 cm⁻¹) by 0.58.

The TFE-based polymer powder or composition was press-molded into a thin-film disc and the thin-film disc was subjected to FT-IR measurement, so that infrared absorbances were obtained. The HFP content was determined by multiplying the ratio (absorbance at 982 cm⁻¹)/(absorbance at 935 cm⁻¹) by 0.3.

### <Standard specific gravity (SSG)>

The SSG was determined by the water displacement method in conformity with ASTM D792 using a sample molded in conformity with ASTM D4895-89.

### <Extrusion pressure>

An amount of 60 g of the TFE-based polymer powder and 12.3 g of a hydrocarbon oil (trade name: Isopar G (registered trademark), ExxonMobil Corp.) as an extrusion aid were mixed for three minutes in a polyethylene container. A cylinder of an extruder was filled with the resulting mixture at room temperature (25 ± 2°C). A load of 0.47 MPa was applied to a piston inserted into the cylinder and maintained for one minute. Then, the mixture was extruded through an orifice at a ram speed of 20 mm/min. The ratio of the cross-sectional area of the cylinder to the cross-sectional area of the orifice was 1000. The value obtained by dividing the load (N) at which the pressure was in equilibrium in the latter half of the extrusion operation by the cylinder cross-sectional area was defined as the extrusion pressure (MPa).

### <Endothermic peak temperature>

The endothermic peak temperature was defined as the temperature corresponding to the minimum point in a region (A) or a region (B) on a heat-of-fusion curve obtained by performing differential scanning calorimetry (DSC) at a temperature-increasing rate of 2°C/min on a TFE-based polymer powder or composition that had never been heated to a temperature of 300°C or higher.

### <Endothermic peak intensity>

Each endothermic peak intensity was determined as the distance between a minimum point (a) and an intersection point (b), where the minimum point (a) is a minimum point on the heat of fusion curve in the measurement of the endothermic peak temperature and the intersection point (b) is an intersection of a line passing through the minimum point (a) and perpendicular to the horizontal axis (temperature) with a line connecting the points at 305°C and 355°C on the heat of fusion curve.

### <Endothermic peak intensity ratio>

The value obtained by dividing the endothermic peak intensity in the region (A) by the endothermic peak intensity in the region (B) was used.

### <Consideration of expansion>

According to JP 2002-201217 A, the following procedures were performed. To 100 g of the TFE-based polymer powder was added 21.7 g of a lubricant (trade name: Isopar H (registered trademark), ExxonMobil Corp.), followed by mixing for three minutes. The mixture was allowed to stand in a thermostatic chamber at 25°C for two hours, and then paste-extruded through an orifice (diameter 2.5 mm, land length 1.1 cm, introduction angle 30°) at 25°C under the conditions of a reduction ratio (ratio between the cross-sectional area of the die inlet and the cross-sectional area of the die outlet) of 100 and an extrusion speed of 51 cm/min. Thereby, a beading was obtained. The beading obtained was dried at 230°C for 30 minutes, whereby the lubricant was removed from the beading. The dried beading was cut into appropriate lengths and each of the resulting samples was clamped at each end with a gap between the clamps of 3.8 cm, followed by heating to 300°C in an air-circulating furnace. The clamps were then moved apart at an expansion speed of 1000%/sec until the separation distance corresponded to a total degree of stretching of 2400%. The "total degree of stretching" shows the increase in length attributable to expansion relative to the beading length (100%) before the expansion test. If no breakage occurred during the expansion, the beading was considered to be expandable, and if breakage occurred during the expansion, the beading was considered to be non-expandable.

### <Water content>

The mass of the TFE-based polymer powder or composition in an amount of about 20 g was weighed before and after heating at 150°C for two hours, and the water content was calculated by the following formula. The sample was taken three times, and this calculation was performed for each sample, and the values were then averaged. This average was taken as the water content. Water content (% by mass) = [(mass (g) of TFE-based polymer powder or composition before heating) - (mass (g) of TFE-based polymer powder or composition after heating)]/(mass (g) of TFE-based polymer powder or composition before heating) × 100

<Amounts of perfluoroether carboxylic acids A and B>

To 1 g of the TFE-based polymer composition weighed was added 10 g (12.6 ml) of methanol, followed by sonication for 60 minutes to obtain an extract. The resulting extract was subjected to LC/MS/MS assay. Measurement was performed on fluorine-containing compounds in the extract using a liquid chromatograph-mass spectrometer (Waters, LC-MS ACQUITY UPLC/TQD). Table 1 shows the instrument configuration and LC-MS measurement conditions. Aqueous solutions having five or more different levels of fluorine-containing compound concentrations were prepared using an aqueous solution of a fluorine-containing compound with a known concentration, and LC/MS analysis was performed on the aqueous solutions containing varied amounts of the fluorine-containing compound. The relation between the amount and the area relative to the amount was plotted, and a calibration curve was drawn. Based on the resulting calibration curve, the area of the fluorine-containing compound in the extract in the LC/MS chromatogram was converted to the amount of the fluorine-containing compound.

The lower detection limit in this measurement method is 10 ppb by mass.

**[Table 1]**

| LC sysem | | | |
|---|---|---|---|
| | Device | Acquity UPLC from Waters | |
| | Column | Acquity UPLC BEH C18 1.7 µm (2.1 × 50 mm) from Waters | |
| | Mobile phase | A CH₃CN | |
| | | B 20 mM CH₃COONH₄/H₂O | |
| | | 0→1.5min | AB = 10:90 |
| | | 1.5→8.5 min | AB = 10:90 → A:B = 90:10 Linear gradient |
| | | 8.5→10 min | AB = 90:10 |
| | Flow rate | 0.4 mL/min | |
| | Column temperature | 40°C | |
| | Sample injection amount | 5 µL | |

| MS system | | | |
|---|---|---|---|
| | Device | TQ Detecter | |
| | Measurement mode | MRM (Multiple Reaction Monitoring) | |
| | Ionization method | Electrospray ionization | |
| | | Negative mode | |

### <Average aspect ratio of powder>

The average aspect ratio was determined as follows: the TFE-based polymer powder or composition was thinly spread on a black paper surface with air without applying shear to the powder and was observed using a microscope, and the average was taken over the ratios of the long axis to the short axis of 100 or more particles selected at random.

A white solid A (perfluoroether carboxylic acid A ammonium salt) was obtained by the method described in Synthetic Example 1 in WO 2021/045228.

The following fluorine-containing surfactant having a molecular weight of 1000 or less were provided.

Perfluoroether carboxylic acid B ammonium salt: Ammonium perfluoro(2-methyl-3-oxahexanoate) available from Fujifilm Wako Pure Chemical Corporation, structural formula: CF₃CF₂CF₂OCF(CF₃)COONH₄

The following hydrophilic monomer was provided.

Hydrophilic monomer: Ammonium 2,3,3,3-tetrafluoro-2-[(1,1,2-trifluoro-2propenyl)oxy]-propanoate, structural formula: CH₂=CFCF₂OCF(CF₃)COONH₄

### Synthesis Example 1

A 6-L stainless-steel autoclave equipped with a stainless-steel stirring blade and a temperature-controlling jacket was charged with 3580 g of deionized water, 100 g of paraffin wax, and 5.4 g of the white solid A. The inside of the autoclave was purged with nitrogen gas with warming to 70°C to remove oxygen. After 0.06 g of HFP was injected with TFE, TFE was injected to set the pressure inside the system to 0.78 MPaG and the temperature inside the system was maintained at 70°C under stirring. Next, an aqueous solution prepared by dissolving 15.4 mg of ammonium persulfate in 20 g of water was injected with TFE into the system, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 430 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached approximately 1540 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby an aqueous TFE-based polymer dispersion was obtained. The aqueous TFE-based polymer dispersion had an average primary particle size of 246 nm and a solid concentration of 29.8% by mass.

### Production Example 1

The aqueous TFE-based polymer dispersion obtained in Synthesis Example 1 was diluted to a solid concentration of 13% by mass. The dilution was stirred in a container for coagulation of the TFE-based polymer, and water was filtered out, whereby a wet TFE-based polymer powder was obtained.

The resulting wet TFE-based powder was placed in a stainless-steel mesh tray and the mesh tray was heated in a hot air circulating electric furnace at 180°C. After 18 hours, the mesh tray was taken out and air-cooled, whereby a TFE-based polymer powder was obtained.

The TFE-based polymer powder had a HFP content of 0.027% by mass and a SSG of 2.150.

### Synthesis Example 2

A 6-L stainless-steel autoclave equipped with a stainless-steel stirring blade and a temperature-controlling jacket was charged with 3480 g of deionized water, 100 g of paraffin wax, and 5.3 g of the white solid A. The inside of the autoclave was purged with nitrogen gas with warming to 70°C to remove oxygen. TFE was injected to set the pressure inside the system to 0.78 MPaG and the temperature inside the system was maintained at 70°C under stirring. Next, an aqueous solution prepared by dissolving 15.0 mg of ammonium persulfate in 20 g of water was injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached approximately 1200 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby an aqueous TFE-based polymer dispersion was obtained. The aqueous TFE-based polymer dispersion had an average primary particle size of 310 nm and a solid concentration of 25.3% by mass.

### Production Example 2

The aqueous TFE-based polymer dispersion obtained in Synthesis Example 2 was diluted to a solid concentration of 13% by mass. The dilution was stirred in a container for coagulation of the TFE-based polymer, and water was filtered out, whereby a wet TFE-based polymer powder was obtained.

The resulting wet TFE-based polymer powder was placed in a stainless-steel mesh tray and the mesh tray was heated in a hot air circulating electric furnace at 180°C. After 20 hours, the mesh tray was taken out and air-cooled, whereby a TFE-based polymer powder was obtained.

The TFE-based polymer powder had a SSG of 2.156.

### Synthesis Example 3

A 6-L stainless-steel autoclave equipped with a stainless-steel stirring blade and a temperature-controlling jacket was charged with 3580 g of deionized water, 100 g of paraffin wax, and 5.4 g of the white solid A. The inside of the autoclave was purged with nitrogen gas with warming to 80°C to remove oxygen. After addition of 1.20 g of CTFE, TFE was further injected to set the pressure inside the system to 0.78 MPaG and the temperature inside the system was maintained at 80°C under stirring. Next, an aqueous solution prepared by dissolving 360 mg of disuccinic peroxide in 20 g of water and an aqueous solution prepared by dissolving 10 mg of ammonium persulfate in 20 g of water were injected with TFE, whereby a polymerization reaction was started. The pressure inside the system dropped as the polymerization reaction progressed. TFE was thus added so that the temperature inside the system was maintained at 80°C and the pressure inside the system was maintained at 0.78 MPaG. When 1530 g of TFE had been consumed from the start of the polymerization (conversion rate: 90%), 4.2 g of CTFE was injected with TFE. The polymerization was further continued. When the amount of TFE polymerized reached approximately 1700 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby an aqueous TFE-based polymer dispersion was obtained. The aqueous TFE-based polymer dispersion had an average primary particle size of 241 nm and a solid concentration of 32.0% by mass. The particles of the TFE-based polymer obtained above have a core-shell structure.

### Production Example 3

The aqueous TFE-based polymer dispersion obtained in Synthesis Example 3 was diluted to a solid concentration of 13% by mass. The dilution was stirred in a container for coagulation of the TFE-based polymer, and water was filtered out, whereby a wet TFE-based polymer powder was obtained.

The wet TFE-based polymer powder was placed in a stainless-steel mesh tray, and the mesh tray was heated in a hot air circulating electric furnace at 145°C. After 18 hours, the mesh tray was taken out and air-cooled, whereby a TFE-based polymer powder was obtained.

The TFE-based polymer powder had a CTFE content of 0.23% by mass, a SSG of 2.170, and an extrusion pressure of 36 MPa.

### Synthesis Example 4

An aqueous TFE-based polymer dispersion was obtained as in Synthesis Example 2, except that the 5.3 g of the white solid A was changed to 15.75 g of the perfluoroether carboxylic acid B ammonium salt and 35 mg of the hydrophilic monomer. The aqueous TFE-based polymer dispersion had an average primary particle size of 295 nm and a solid concentration of 26.5% by mass.

### Production Example 4

A TFE-based polymer powder was obtained as in Production Example 2, except that the aqueous TFE-based polymer dispersion obtained in Synthesis Example 4 was used.

The TFE-based polymer powder had a SSG of 2.159.

### Synthesis Example 5

An aqueous TFE-based polymer dispersion was obtained as in Production Example 1, except that the 5.4 g of the white solid A was changed to 16 g of the perfluoroether carboxylic acid B ammonium salt and 30 mg of the hydrophilic monomer. The aqueous TFE-based polymer dispersion had an average primary particle size of 245 nm and a solid concentration of 31.8% by mass.

### Production Example 5

A TFE-based polymer powder was obtained as in Production Example 3, except that the aqueous TFE-based polymer dispersion obtained in Synthesis Example 5 was used.

The TFE-based polymer powder had a CTFE content of 0.23% by mass, a SSG of 2.172, and an extrusion pressure of 37 MPa.

### Manufacturing Example 1

The aqueous TFE-based polymer dispersions obtained in Synthesis Example 1 and Synthesis Example 3 were mixed at a solid mass ratio (Synthesis Example 1:Synthesis Example 3) of 75:25 and diluted to a solid concentration of 13% by mass. The dilution was stirred vigorously in a container for coagulation of the TFE-based polymers, and water was filtered out, whereby a wet TFE-based polymer powder was obtained. The wet TFE-based polymer powder was placed in a stainless-steel mesh tray (amount: 2.0 g/cm²), and the mesh tray was heated in a hot air circulating electric furnace at 180°C. After 18 hours, the mesh tray was taken out and air-cooled, whereby a TFE-based polymer composition 1 was obtained.

The TFE-based polymer composition 1 had a CTFE content of 0.06% by mass and a HFP content of 0.020% by mass. The TFE-based polymer composition 1 was expandable and had endothermic peak temperatures of 338°C and 343°C, an endothermic peak intensity ratio of 0.98, a water content of 0.000% by mass, a perfluoroether carboxylic acid A content of less than 10 ppb by mass, and an average aspect ratio of 1.1 when in a powder form.

### Manufacturing Example 2

A TFE-based polymer composition 2 was obtained as in Manufacturing Example 1, except that the solid mass ratio of the aqueous TFE-based polymer dispersions was changed to 50:50.

The TFE-based polymer composition 2 had a CTFE content of 0.10% by mass and a HFP content of 0.014% by mass. The TFE-based polymer composition 2 was expandable and had endothermic peak temperatures of 337°C and 343°C, an endothermic peak intensity ratio of 1.44, a water content of 0.000% by mass, a perfluoroether carboxylic acid A content of less than 10 ppb by mass, and an average aspect ratio of 1.3 when in a powder form.

### Manufacturing Example 3

A TFE-based polymer composition 3 was obtained as in Manufacturing Example 2, except that the aqueous TFE-based polymer dispersion obtained in Synthesis Example 1 was changed to the aqueous TFE-based polymer dispersion obtained in Synthesis Example 2.

The TFE-based polymer composition 3 had a CTFE content of 0.10% by mass. The TFE-based polymer composition 3 was expandable and had endothermic peak temperatures of 337°C and 343°C, an endothermic peak intensity ratio of 1.36, a water content of 0.000% by mass, a perfluoroether carboxylic acid A content of less than 10 ppb by mass, and an average aspect ratio of 1.2 when in a powder form.

### Manufacturing Example 4

A TFE-based polymer composition 4 was obtained as in Manufacturing Example 3, except that the mesh tray was replaced with a flat tray (tray with no air permeability on the bottom and sides), the drying temperature was changed from 180°C to 145°C, and the drying time was changed from 18 hours to 5 hours.

The TFE-based polymer composition 4 had a CTFE content of 0.10% by mass. The TFE-based polymer composition 4 had endothermic peak temperatures of 337°C and 343°C, an endothermic peak intensity ratio of 1.36, a water content of 0.121% by mass, and an average aspect ratio of 1.3 when in a powder form.

### Manufacturing Example 5

The aqueous TFE-based polymer dispersions obtained in Synthesis Example 4 and Synthesis Example 5 were mixed at a solid mass ratio (Synthesis Example 4:Synthesis Example 5) of 50:50 and diluted to a solid concentration of 13% by mass. The dilution was stirred vigorously in a container for coagulation of the TFE-based polymers, and water was filtered out, whereby a wet TFE-based polymer powder was obtained. The wet TFE-based polymer powder was placed in a stainless-steel flat tray, and the flat tray was heated in a hot air circulating electric furnace at 145°C. After 18 hours, the flat tray was taken out and air-cooled, whereby a TFE-based polymer composition 5 was obtained.

The TFE-based polymer composition 5 had a CTFE content of 0.10% by mass. The TFE-based polymer composition 5 was expandable and had endothermic peak temperatures of 337°C and 343°C, an endothermic peak intensity ratio of 1.36, a water content of 0.016% by mass, a perfluoroether carboxylic acid B content of 160 ppb by mass, and an average aspect ratio of 1.1 when in a powder form.

### Manufacturing Example 6

The TFE-based polymer powders obtained in Production Example 2 and Production Example 3 were mixed at a solid mass ratio (Production Example 2:Production Example 3) of 50:50 using a blender (WARING BLENDER 7012S available from WARING) at a rotation speed of 3100 rpm for one minute, whereby a TFE-based polymer composition 6 was obtained.

The TFE-based polymer composition 6 had a CTFE content of 0.10% by mass. The TFE-based polymer composition 6 had endothermic peak temperatures of 337°C and 343°C, an endothermic peak intensity ratio of 1.35, a water content of 0.001% by mass, a perfluoroether carboxylic acid A content of less than 10 ppb by mass, and an average aspect ratio of 2.6 when in a powder form.

### Manufacturing Example 7

The wet powder obtained in Production Example 2 was placed in a flat tray, and the flat tray was heated in a hot air circulating electric furnace at 180°C. After five hours, the flat tray was taken out and air-cooled, whereby a TFE-based polymer powder 7 was obtained.

The TFE-based polymer powder 7 had an endothermic peak temperature of 344°C, a water content of 0.126% by mass, and an average aspect ratio of 1.2 when in a powder form.

The TFE-based polymer powders and compositions obtained as above were evaluated by the following methods.

### Evaluation of electrolyte-containing battery

By the following procedures, mixture sheets of Examples 1 to 4, Examples A1 and A2, and Comparative Example 1 were produced, and evaluations of the sheets and batteries were performed.

### <Production of positive electrode mixture sheet>

The active material and the conductive aid were weighed, and the materials were fed into a V-type mixer, followed by mixing at 37 rpm for 10 minutes, whereby a mixture containing the active material and the conductive aid was obtained. Then, the weighed binder (TFE-based polymer powder or composition) was added to the mixture and the mixture was allowed to cool sufficiently in a thermostatic bath at 5°C. The mixture containing the active material, the conductive aid, and the binder was fed into a Henschel mixer and processed at 1000 rpm for three minutes to homogenize the mixture.

Thereafter, the mixture was sufficiently warmed in a thermostatic bath at 50°C. Then, the mixture was treated in a pressure kneader (D1-5: Nihon Spindle Manufacturing Co., Ltd.) for five minutes (32 rpm, heater 50°C, pressure 0.5 MPa) to promote fibrillation, thereby obtaining a bulky electrode mixture with aggregating properties. The bulky electrode mixture was fed into a Henschel mixer and processed at 300 rpm for one minute for further pulverization, thereby obtaining an electrode mixture.

The electrode mixture was fed to parallel metal rolls (temperature: 80°C, rotation speed: 1 m/min) and rolled, whereby an electrode mixture sheet was obtained. The resulting rolled sheet was coarsely crushed by folding it into two, and the electrode mixture was again fed to the metal rolls (temperature: 80°C, rotation speed: 1 m/min) and rolled, whereby an electrode mixture sheet with higher strength was obtained.

The electrode mixture sheet was then fed to a roll press machine to adjust the gap. The thickness of the positive electrode mixture layer was finally adjusted to 90 um.

Tables 2 shows the material types and compositions.

**[Table 2]**

| | (A) Active material | (B) Binder | (C) Conductive aid | Composition ratio A:B:C (mass ratio) |
|---|---|---|---|---|
| Comparative Example 1 | Li(Ni_{0.8}Mn_{0.1}Co_{0.1})O₂ | TFE-based polymer powder 7 | denka Li-400 | 96:2:2 |
| Example 1 | Li(Ni_{0.8}Mn_{0.1}Co_{0.1})O₂ | TFE-based polymer composition 1 | denka Li-400 | 96:2:2 |
| Example 2 | Li(Ni_{0.8}Mn_{0.1}Co_{0.1})O₂ | TFE-based polymer composition 2 | denka Li-400 | 96:2:2 |
| Example 3 | Li(Ni_{0.8}Mn_{0.1}Co_{0.1})O₂ | TFE-based polymer composition 3 | denka Li-400 | 96:2:2 |
| Example 4 | Li(Ni_{0.8}Mn_{0.1}Co_{0.1})O₂ | TFE-based polymer composition 4 | denka Li-400 | 96:2:2 |
| Example A1 | Li(Ni_{0.8}Mn_{0.1}Co_{0.1})O₂ | TFE-based polymer composition 5 | denka Li-400 | 96:2:2 |
| Example A2 | Li(Ni_{0.8}Mn_{0.1}Co_{0.1})O₂ | TFE-based polymer composition 6 | denka Li-400 | 96:2:2 |

| | | | | |
|---|---|---|---|---|
| denka Li-400: carbon black available from Denka Company Limited. | | | | |

### <Evaluation of aggregating properties of powder

The electrode mixture before fed to the parallel metal rolls was sieved using a sieve with 0.18-mm mesh aperture (JIS Z 8801) for 30 seconds. The electrode mixture was evaluated as × (Bad) when aggregates remained on the mesh and evaluated as o (Good) when it completely passed through the sieve. Table 3 shows the results.

### <Measurement of strength of positive electrode mixture sheet>

The positive electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 8. The test results were averaged. The average was compared with the average in Comparative Example 1 taken as 100%. The coefficient of variation was calculated to evaluate the variability. Table 3 shows the results.

### <Evaluation of flexibility of positive electrode mixture sheet (bending test)>

The obtained electrode mixture sheets were cut, whereby test pieces with a width of 4 cm and a length of 10 cm were produced. The test pieces were then wrapped around a Φ2-mm rod, and the test pieces were visually checked for damage such as scratches and cracks. No damage such as scratches and cracks was observed in Examples 1 to 4 and Examples A1 and A2.

### <Production of positive electrode>

The positive electrode mixture sheet was bonded to 20-um aluminum foil in the following manner.

The adhesive used was a slurry prepared by dissolving polyvinylidene fluoride (PVDF) in N-methylpyrrolidone (NMP) and dispersing carbon black therein at a ratio of 80:20. The above adhesive was applied to aluminum foil and dried on an electric griddle at 120°C for 15 minutes, whereby a current collector with an adhesive layer was formed.

After that, the positive electrode mixture sheet was placed on the current collector with an adhesive layer, and the positive electrode mixture sheet and the current collector were bonded to each other using a roll press machine heated to 100°C. The workpiece was cut into the desired size, followed by tab attachment, whereby a positive electrode was obtained.

### <Production of negative electrode>

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-µm-thick copper foil and dried. The workpiece was rolled using a press and cut to provide a piece in a desired size, followed by tab attachment. This piece was used as a negative electrode.

### <Preparation of electrolyte solution>

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were added thereto and dissolved therein, whereby a mixed solution was prepared. A LiPF₆ salt was mixed with this mixed solution at 23°C so that the concentration thereof in the electrolyte solution was 1.1 mol/L.

### <Production of aluminum laminate cell>

The above positive electrode and negative electrode were placed to face each other with a 20-um-thick porous polyethylene film (separator) in between. The non-aqueous electrolyte solution prepared above was injected thereinto and the non-aqueous electrolyte solution was made to sufficiently permeate into the components such as the separator. The workpiece was then sealed, pre-charged, and aged, whereby a lithium-ion secondary battery was produced.

### <Evaluation of storage characteristics (remaining capacity rate, amount of gas generated)>

The lithium-ion secondary battery produced above was subjected to constant current/constant voltage charge (hereinafter, referred to as CC/CV charge) (0.1 C cut off) to 4.3 V at a current corresponding to 0.33 C at 25°C, and then discharged to 3 V at a constant current of 0.33 C. This was counted as one cycle, and the discharge capacity at the third cycle was used to determine the initial discharge capacity.

The battery whose initial discharge capacity had been evaluated was again subjected to CC/CV charge (0.1 C cut off) at 25°C to 4.3 V, and the volume of the battery was determined by the Archimedes' method. After determining the volume of the battery, the battery was stored at high temperature at 60°C for 30 days. After storage at high temperature, the battery was sufficiently cooled, and the volume thereof was determined at 25°C. Based on the difference in volume of the battery before and after the storage test, the amount of gas generated was determined. The amounts of gas generated were compared with the amount of gas generated in Comparative Example 1 taken as 100.

After determination of the amount of gas generated, the battery was discharged at 0.33 C at 25°C to 3 V, and the remaining capacity was determined.

The ratio of the remaining capacity after storage at high temperature to the initial discharge capacity was calculated, and this was used as the remaining capacity rate (%). (Remaining capacity) / (Initial discharge capacity) × 100 = Remaining capacity rate (%)

Table 3 shows the results.

**[Table 3]**

| | Aggregating properties | Strength | Coefficient of variation | Remaining capacity | Amount of gas generated |
|---|---|---|---|---|---|
| Comparative Example 1 | × | 100% | 28% | 69% | 100 |
| Example 1 | ○ | 162% | 15% | 74% | 85 |
| Example 2 | ○ | 143% | 12% | 73% | 86 |
| Example 3 | ○ | 158% | 13% | 74% | 85 |
| Example 4 | ○ | 123% | 23% | 70% | 98 |
| Example A1 | ○ | 138% | 14% | 73% | 89 |
| Example A2 | ○ | 112% | 20% | 74% | 85 |

### Evaluation of solid electrolyte mixture sheet

Mixture sheets of Examples 5 to 8 and Comparative Example 2 were produced and evaluated by the following procedures. The production and evaluation were performed in an argon atmosphere.

### <Production of solid electrolyte mixture sheet>

The weighed binder (TFE-based polymer powder or composition) was cooled sufficiently in a thermostatic bath at 5°C, fed into a Henschel mixer, and processed at 300 rpm for two minutes, whereby pulverization was performed.

The pulverized binder and the solid electrolyte were each weighed, and cooled sufficiently in a thermostatic bath at 5°C. They were fed into a Henschel mixer and processed at 300 rpm for one minute to homogenize the mixture.

Then, the mixture was thoroughly heated in a thermostatic bath at 40°C, and processed in a Henschel mixer at 1000 rpm for one minute so that fibrillation was promoted, whereby an electrolyte mixture was obtained.

The electrode mixture was fed to parallel metal rolls (temperature: 80°C, rotation speed: 1 m/min) and rolled, whereby an electrolyte mixture sheet was obtained. The resulting rolled sheet was coarsely crushed by folding it into two, and the electrolyte mixture was again fed to the metal rolls (temperature: 80°C, rotation speed: 1 m/min) and rolled, whereby an electrolyte mixture sheet with higher strength was obtained.

The electrolyte mixture sheet was then fed into a roll press machine to adjust the gap. The thickness of the electrolyte mixture sheet was finally adjusted to 120 um.

Tables 4 shows the material types and compositions.

**[Table 4]**

| | (A) Active material | (B) Binder | (C) Conductive aid | (D) Solid electrolyte | Composition ratio A:B:C:D (mass ratio) |
|---|---|---|---|---|---|
| Comparative Example 2 | Not used | TFE-based polymer powder 7 | Not used | Li₁₀SnP₂S₁₂ | 0:1.5:0:98.5 |
| Example 5 | Not used | TFE-based polymer composition 1 | Not used | Li₁₀SnP₂S₁₂ | 0:1.5:0:98.5 |
| Example 6 | Not used | TFE-based polymer composition 2 | Not used | Li₁₀SnP₂S₁₂ | 0:1.5:0:98.5 |
| Example 7 | Not used | TFE-based polymer composition 3 | Not used | Li₁₀SnP₂S₁₂ | 0:1.5:0:98.5 |
| Example 8 | Not used | TFE-based polymer composition 4 | Not used | Li₁₀SnP₂S₁₂ | 0:1.5:0:98.5 |

### <Measurement of strength of solid electrolyte mixture sheet (Tensile test)>

The solid electrolyte mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 8. The test results were averaged. The average was compared with the average in Comparative Example 2 taken as 100%. Table 5 shows the results.

### <Evaluation of flexibility of solid electrolyte mixture sheet (bending test)>

The obtained solid electrolyte mixture sheets were cut, whereby test pieces with a width of 4 cm and a length of 10 cm were produced. The test pieces were then wrapped around a Φ10-mm rod, and the test pieces were visually checked for damage such as scratches and cracks. When no damage was found, the test was conducted with an even thinner Φ5-mm rod, and the test pieces were checked for damage. When no damage was found again, the test was conducted with an even thinner Φ2-mm rod, and the test pieces were checked for damage. The results were classified from A to D.
A: No damage with Φ2-mm rod
B: Damaged with Φ2-mm rod
C: Damaged with Φ5-mm rod
D: Damaged with Φ10-mm rod

Table 5 shows the results.

### <Ion conductivity of solid electrolyte mixture sheet>

The solid electrolyte mixture sheet was cut to an appropriate size, and gold was vapor-deposited on both sides of the resulting sheet. Then, the resulting solid electrolyte mixture sheet punched out to a Φ10 mm circle was placed in a pressure cell, the cell screws were tightened with 8 N, the top and bottom of the cell were caused to function as electrodes. FIG. 1 shows a schematic cross-sectional view of the pressure cell used.

Using this sample, the ion conductivity was measured using an impedance measurement apparatus available from Toyo Corporation under the conditions of 25°C, an AC amplitude modulation of 10 mV, and a frequency of 5 × 10⁶ to 0.1 Hz.

Table 5 shows the results.

**[Table 5]**

| | Strength | Bending test | Ion conductivity (mS/cm) |
|---|---|---|---|
| Com parative Example 2 | 100% | B | 0.1 |
| Example 5 | 179% | A | 1.5 |
| Example 6 | 155% | A | 1.1 |
| Example 7 | 171% | A | 0.9 |
| Example 8 | 142% | A | 0.4 |

### Evaluation of solid electrolyte positive electrode mixture sheet

Mixture sheets of Examples B1 and B2 and Comparative Example 3 were produced and evaluated by the following procedures. The production and evaluation were performed in an argon atmosphere.

### <Production of solid electrolyte electrode mixture sheet>

The active material and the conductive aid were weighed, and the materials were fed into a V-type mixer, followed by mixing at 37 rpm for 10 minutes, whereby a mixture containing the active material and the conductive aid was obtained. Then, the weighed binder (TFE-based polymer powder or composition) was added to the mixture, and the mixture was allowed to cool sufficiently in a thermostatic bath at 5°C. Then, the mixture was added to a Henschel mixer and processed at 2800 rpm for 10 minutes so that dispersion and fibrillation of the TFE composition were performed, whereby a solid electrolyte electrode mixture was obtained.

The electrode mixture was fed to parallel metal rolls (temperature: 80°C, rotation speed: 0.5 m/min) and rolled, whereby a solid electrolyte electrode mixture sheet was obtained. The resulting rolled sheet was coarsely crushed by folding it into two, and the solid electrolyte electrode mixture was again fed to the metal rolls (temperature: 80°C, rotation speed: 0.5 m/min) and rolled. Through this step, fibrillation was promoted, whereby a high-strength solid electrolyte electrode mixture sheet was obtained. The solid electrolyte electrode mixture sheet was then fed into a roll press machine, and the thickness of the solid electrolyte electrode mixture sheet was adjusted to 150 um.

Table 6 shows the material types and compositions.

**[Table 6]**

| | (A) Active material | (B) Binder | (C) Conductive aid | (D) Solid electrolyte | Composition ratio A:B:C:D (mass ratio) |
|---|---|---|---|---|---|
| Comparative Example 3 | Li(Ni_{0.5}Mn_{0.3}Co_{0.2})O₂ | TFE-based polymer powder 7 | denka Li-400 | Li₆PS₅Cl | 70:0.9:0.8:28.3 |
| Example B1 | Li(Ni_{0.5}Mn_{0.3}Co_{0.2})O₂ | TFE-based polymer composition 5 | denka Li-400 | Li₆PS₅Cl | 70:0.9:0.8:28.3 |
| Example B2 | Li(Ni_{0.5}Mn_{0.3}Co_{0.2})O₂ | TFE-based polymer composition 6 | denka Li-400 | Li₆PS₅Cl | 70:0.9:0.8:28.3 |

| | | | | | |
|---|---|---|---|---|---|
| denka Li-400: carbon black available from Denka Company Limited. | | | | | |

### <Measurement of strength of solid electrolyte electrode mixture sheet (Tensile test)>

The solid electrolyte electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 8. The test results were averaged. The average was compared with the average in Comparative Example 3 taken as 100%.

Table 7 shows the results.

### <Evaluation of flexibility of solid electrolyte mixture sheet (Bending test)>

The obtained solid electrolyte electrode mixture sheets were cut, whereby test pieces with a width of 4 cm and a length of 10 cm were produced. The test pieces were then wrapped around a Φ10-mm rod, and the test pieces were visually checked for damage such as scratches and cracks. When no damage was found, the test was conducted with an even thinner Φ5-mm rod, and the test pieces were checked for damage. When no damage was found again, the test was conducted with an even thinner Φ2-mm rod, and the test pieces were checked for damage. The results were classified from A to D.
A: No damage with Φ2-mm rod
B: Damaged with Φ2-mm rod
C: Damaged with Φ5-mm rod
D: Damaged with Φ10-mm rod

Table 7 shows the results.

**[Table 7]**

| | Strength | Bending test |
|---|---|---|
| Com parative Example 3 | 100% | C |
| Example B1 | 160% | B |
| Example B2 | 125% | B |

### REFERENCE SIGNS LIST

1: screw
2: nut
3: insulating sheet
4: solid electrolyte mixture sheet
5: deposited gold
6: upper electrode
7: lower electrode

## Claims

1. A tetrafluoroethylene-based polymer composition for use in an electrochemical device binder,
the tetrafluoroethylene-based polymer composition having endothermic peaks in a region (A) of 330°C or higher and lower than 340°C and in a region (B) of 340°C or higher and 350°C or lower in differential scanning calorimetry.

2. An electrochemical device binder consisting essentially of a tetrafluoroethylene-based polymer composition,
the tetrafluoroethylene-based polymer composition having endothermic peaks in a region (A) of 330°C or higher and lower than 340°C and in a region (B) of 340°C or higher and 350°C or lower in differential scanning calorimetry.

3. The electrochemical device binder according to claim 2,
wherein the tetrafluoroethylene-based polymer composition has an intensity ratio represented by an endothermic peak intensity in the region (A)/an endothermic peak intensity in the region (B) of 0.5 or more.

4. The electrochemical device binder according to claim 3,
wherein the tetrafluoroethylene-based polymer composition has the intensity ratio represented by the endothermic peak intensity in the region (A)/the endothermic peak intensity in the region (B) of 0.8 to 2.0.

5. The electrochemical device binder according to any one of claims 2 to 4,
wherein the tetrafluoroethylene-based polymer composition comprises a tetrafluoroethylene copolymer containing a tetrafluoroethylene unit and a modifying monomer unit based on a modifying monomer copolymerizable with tetrafluoroethylene.

6. The electrochemical device binder according to claim 5,
wherein the modifying monomer unit is contained in the tetrafluoroethylene copolymer in an amount of 10% by mass or less relative to all polymerized units.

7. The electrochemical device binder according to any one of claims 2 to 6,
wherein the tetrafluoroethylene-based polymer composition contains a tetrafluoroethylene unit and a modifying monomer unit based on a modifying monomer copolymerizable with tetrafluoroethylene.

8. The electrochemical device binder according to claim 7,
wherein the modifying monomer unit is contained in the tetrafluoroethylene-based polymer composition in an amount of 0.20% by mass or less relative to all polymerized units.

9. The electrochemical device binder according to any one of claims 5 to 8,
wherein the modifying monomer is a compound represented by the following formula (I):
CX¹X²= CX³X⁴ (I)
wherein X¹ to X³ are each independently H or F and X⁴ is F, Cl, Rf, or O-Rf, where Rf is a perfluoro organic group.

10. The electrochemical device binder according to claim 9,
wherein the modifying monomer includes at least one selected from the group consisting of chlorotrifluoroethylene and hexafluoropropylene.

11. The electrochemical device binder according to any one of claims 2 to 10,
wherein the tetrafluoroethylene-based polymer composition is expandable.

12. The electrochemical device binder according to any one of claims 2 to 11,
wherein the tetrafluoroethylene-based polymer composition comprises a tetrafluoroethylene copolymer having an extrusion pressure of 75 MPa or lower at a reduction ratio of 1000.

13. The electrochemical device binder according to any one of claims 2 to 12,
wherein the tetrafluoroethylene-based polymer composition is in a powder form.

14. The electrochemical device binder according to any one of claims 2 to 13,
wherein the tetrafluoroethylene-based polymer composition is substantially free from water.

15. The electrochemical device binder according to any one of claims 2 to 14,
wherein the tetrafluoroethylene-based polymer composition is substantially free from a fluorine-containing compound having a molecular weight of 1000 or less.

16. The electrochemical device binder according to any one of claims 2 to 15,
wherein the tetrafluoroethylene-based polymer composition contains a fluoropolymer in an amount of 90% by mass or more relative to the tetrafluoroethylene-based polymer composition.

17. The electrochemical device binder according to any one of claims 2 to 16,
wherein the tetrafluoroethylene-based polymer composition comprises two or more tetrafluoroethylene-based polymers.

18. The electrochemical device binder according to any one of claims 2 to 17,
wherein the tetrafluoroethylene-based polymers in the tetrafluoroethylene-based polymer composition include polytetrafluoroethylene.

19. The electrochemical device binder according to any one of claims 2 to 18,
wherein the fluoropolymer composition in a powder form has an average aspect ratio of 2.5 or less.

20. An electrode mixture comprising:
an electrode active material; and
the tetrafluoroethylene-based polymer composition according to claim 1 or the electrochemical device binder according to any one of claims 2 to 19.

21. The electrode mixture according to claim 20, which is in a sheet form.

22. An electrode comprising:
an electrode active material;
a current collector; and
the tetrafluoroethylene-based polymer composition according to claim 1 or the electrochemical device binder according to any one of claims 2 to 19.

23. A secondary battery comprising the electrode according to claim 22.
